Europäisches Patentamt

European Patent Office

Office européen des brevets

(19)

(11) EP 0 449 682 B1

## (12) EUROPEAN PATENT SPECIFICATION

(45) Date of publication and mention
of the grant of the patent:
**06.11.1996 Bulletin 1996/45**

(51) Int Cl.$^6$: **H03H 17/06**

(21) Application number: **91400542.6**

(22) Date of filing: **27.02.1991**

(54) **A sampling frequency conversion filter**

Filter zur Änderung der Abtastfrequenz

Filtre convertisseur de la fréquence d'échantillonnage

(84) Designated Contracting States:
**DE FR GB**

(30) Priority: **27.02.1990 JP 47010/90**

(43) Date of publication of application:
**02.10.1991 Bulletin 1991/40**

(73) Proprietor: **SONY CORPORATION
Tokyo (JP)**

(72) Inventors:
• **Kikuchi, Akihiro
Shinagawa-ku, Tokyo (JP)**
• **Kondo, Toshiharu
Shinagawa-ku, Tokyo (JP)**

• **Kohashi, Takashi
Shinagawa-ku, Tokyo (JP)**
• **Kato, Fumiaki
Shinagawa-ku, Tokyo (JP)**
• **Hirota Katsuaki
Shinagawa-ku, Tokyo (JP)**

(74) Representative: **Thévenet, Jean-Bruno et al
Cabinet Beau de Loménie
158, rue de l'Université
75340 Paris Cédex 07 (FR)**

(56) References cited:
**EP-A- 0 111 362          EP-A- 0 262 647
EP-A- 0 336 669          FR-A- 2 622 379**

**EP 0 449 682 B1**

**Description**

BACKGROUND OF THE INVENTION

Field of the Invention

This invention relates to a sampling frequency conversion filter and, more particularly to a sampling frequency conversion filter for permitting a digital signal obtained from a CCD imaging device (sampling frequency 4 fsc) with, for example, 760 pixels per line and a digital signal obtained from a CCD imaging device (sampling frequency (8/3) fsc) with, for example, 510 pixels per line to be processed as digital signals of the same sampling frequency.

Description of the Prior Art

There is a known auto focus circuit which, taking into consideration the fact that the intermediate and high range level in a luminance signal from a CCD imaging device becomes maximum at a focus position, extracts the intermediate and high range component in the luminance signal from the CCD imaging device by a high pass filter, then obtains an evaluated value by integrating the level of the intermediate and high range component within a predetermined focus area, and obtains the focus position by controlling the position of a lens to maximize the evaluated value. In a conventional auto focus circuit of this type, an analog high pass filter is used to extract intermediate and high range component in a luminance signal from a CCD imaging device. The analog circuit, however, does not have a good temperature characteristic, and there is some difficulty in obtaining scale reduction. In this connection, there is a proposal for digitalizing a video signal from the CCD imaging device and performing auto focus control in a digital circuit.

In case of constructing the auto focus circuit from a digital circuit, a digital high pass filter is used to extract intermediate and high range component in a luminance signal from the CCD imaging device. The characteristics of the digital high pass filter vary with sampling frequency of the digital signal. As such CCD imaging devices, there are those having, for example, 760 pixels per line, and those having, for example, 510 pixels per line. In case of the CCD imaging device with 510 pixels per line, its sampling frequency is (8/3) fsc (fsc: color subcarrier frequency). In case of the CCD imaging device with 760 pixels per line, its sampling frequency is 4 fsc.

Therefore, in order to construct an auto focus circuit, using digital high pass filters of the same arrangement for both the CCD imaging device with 510 pixels per line, and the CCD imaging device with 760 pixels per line, for example, it is necessary to convert the sampling frequency (8/3) fsc or the sampling frequency 4 fsc from the CCD imaging device into a common sampling frequency.

One approach will be converting a digital signal of sampling frequency (8/3) fsc or 4 fsc from the CCD imaging device into common frequency 2fsc.

However, if the digital signal of sampling frequency (8/3) fsc or 4 fsc, as it is, is converted into the sampling frequency 2 fsc, a problem of affectation by aliasing will occur.

If separate filters are prepared for the digital signal of sampling frequency (8/3) fsc and for the digital signal of sampling frequency 4 fsc in order to remove the affectation by aliasing, the circuit will be large-scaled.

EP-A-0 336 669 describes a digital signal sampling frequency converter for converting a digital signal of first sampling frequency into a converted digital signal of second sampling frequency. In this converter, the input digital signal is oversampled at a third sampling frequency, this third sampling frequency being a common multiple of the first and second sampling frequencies, and an output signal is extracted from the over-sampled data in response to a timing pulse having the output sampling frequency. A controller is provided for controlling the phase of the timing pulse to control the phase of the sampled output data.

The oversampling circuit includes an input flip-flop clocked by clock signals at the first sampling frequency. The output of the input flip-flop is fed to a series of delay elements for delaying samples of the input digital signal by the period of the third sampling frequency. A series of coefficient multipliers are provided for multiplying the respective outputs of the series of delay elements by coefficients and an adder sums the products to produce the over-sampled data. It is from this oversampled data that the output signal is then extracted through a flip-flop circuit clocked at the second sampling frequency. The elements of the oversampling circuit operate at the third sampling frequency, that is the common multiple of the first and second sampling frequencies. Thus, high frequency clocking signals must be provided to the converter circuit of EP-A-0 336 669. Furthermore, if the frequency of the signal to be input to the converter circuit of EP-A-0 336 669 changes then the frequency of the clock signals supplied to the input flip-flop must be changed.

OBJECT AND SUMMARY OF THE INVENTION

It is, therefore, an object of the invention to provide a sampling frequency conversion filter capable of converting

2

digital signals from CCD imaging devices having different numbers of pixels into the same sampling frequency and alleviating affectation by aliasing without increasing the scale of the circuit.

According to an aspect of the invention, there is provided a sampling frequency conversion filter circuit for converting an input digital signal of a first sampling frequency to a converted signal at a second sampling frequency, said converted signal being equivalent to the input digital signal of the first sampling frequency oversampled at a common multiple of the first and second frequencies, filtered, and resampled at said second sampling frequency, the conversion circuit comprising:

a first flip-flop for receiving a digital signal in synchronism with clock pulses at said second sampling frequency;
a delay circuit for delaying the input digital signal of said first sampling frequency by a predetermined time; and
control means for controlling the phase of the digital signal fed to the first flip-flop;

characterised in that:

the first flip-flop is arranged for receiving the input digital signals at the first sampling frequency;
there is further provided a second flip-flop for receiving, in synchronism with clock pulses at said second sampling frequency, the delayed digital signal of the first sampling frequency output by the delay circuit, and an adder circuit for adding the outputs of the first and second flip-flops to produce the converted signal; and
the control means comprises first and second switch means each having single switch outputs connected respectively to the inputs of said first and second flip-flops, said first switch means having 2 switch inputs, and a switching action to selectively connect the first switch output, either to the input digital signal of said first sampling frequency or to the output of said first flip-flop, and said second switch means having 2 switch inputs, and a switching action to selectively connect the second switch output, either to the delayed input digital signal or to the output of said second flip-flop, and a circuit synchronised with clock pulses at said second sampling frequency for controlling the switching action of said first and second switch means, said switching action control circuit comprising three flip-flop circuits connected in cascade, the first of the three cascaded flip-flop circuits being arranged to receive as a data input signal clock pulses at said first sampling frequency and each of said cascaded flip-flop circuits receiving as a clock input signal pulses at said second sampling frequency, the output of the second of the three cascaded flip-flop circuits controlling the switching action of the second switch means and the output of the third of the three cascaded flip-flop circuits controlling the switching action of the first switch means.

For example, when the digital signal of sampling frequency (8/3) fsc is over-sampled at sampling frequency 8 fsc which is a common multiple of sampling frequency 4 fsc and it is output through a filter of a transfer function represented by:

$$H(z) = (1 + 2z^{-1} + 2z^{-2} + z^{-3})/6$$

output data $D_1$, $d_1$, $D_2$, $d_2$,..., are expressed by:

$$D_1 = (A_1 + 2a_1 + 2a_2 + A_2)$$

$$d_1 = (a_1 + 2a_2 + 2A_2 + a_3)$$

$$D_2 = (a_2 + 2A_2 + 2a_3 + a_4)$$

$$d_2 = (A_2 + 2a_3 + 2a_4 + A_3)$$

$$D_3 = (a_3 + 2a_4 + 2A_3 + a_5)$$

$$d_3 = (a_4 + 2A_3 + 2a_5 + a_6)$$

$$D_4 = (A_3 + 2a_5 + 2a_6 + A_4)$$
$$\vdots \qquad \qquad \vdots$$

Since data $a_1$, $a_2$, $a_3$, $a_4$, $a_5$, $a_6$, ... are 0, the following equations are valid:

$$D_1 = A_1 + A_2$$

$$d_1 = 2A_2$$

$$D_2 = 2A_2$$

$$d_2 = A_2 + A_3$$

$$D_3 = 2A_3$$

$$d_3 = 2A_3$$

$$D_4 = A_3 + A_4$$
$$\vdots \qquad \qquad \vdots$$

When such a digital signal is re-sampled at sampling frequency 4 fsc, the result is:

$$D_1 = A_1 + A_2$$

$$D_2 = 2A_2$$

$$D_3 = 2A_3$$

$$D_4 = A_3 + A_4$$

$$D_5 = 2A_4$$

$$D_6 = 2A_5$$
$$\vdots \qquad \qquad \vdots$$

In case of an input signal of sampling frequency (8/3) fsc, in order to limit the band and convert the sampling frequency into 4 fsc, it is sufficient to realize hardware in which such data are output sequentially.

Input data having different phases are formed by a flip flop 96, and they are taken in flip flops 99 and 100 via switch circuits 95 and 98, respectively. An output of the flip flop 99 and an output of the flip flop 100 are added. Under control of switch circuits 95 and 98, input data and an input data signal delayed by the flip flop 96 by a predetermined amount as well as data heretofore stored in the flip flops 99 and 100 are selectively taken in the flip flops 99 and 100, respectively. As a result, the aforementioned digital signals $D_1$, $D_2$, $D_3$, $D_4$, ... are obtained.

In case that the sampling frequency is 4 fsc, the switch circuits 95 and 98 are fixed in one way. Accordingly, data through a filter having the following characteristic are obtained:

$$H(Z) = (1 + Z^{-1})/2$$

## BRIEF DESCRIPTION OF THE DRAWINGS

Fig. 1 is a block diagram showing an arrangement of conversion filter for the use of a CCD imaging device with 510 pixels per line;

Fig. 2 is a block diagram showing an arrangement of conversion filter for the use of a CCD imaging device with 760 pixels per line;

Fig. 3 is a block diagram showing an entire arrangement of a video camera to which the invention is applicable;

Fig. 4 is a side view for explaining a lens arrangement used in the video camera to which the invention is applicable;

Fig. 5 is a schematic view used for explaining a pixel arrangement of an imaging device in the video camera to which the invention is applicable;

Fig. 6 is a timing chart used for explaining an optical detector in the video camera to which the invention is applicable;

Fig. 7 is a block diagram showing an arrangement of the optical detector in the video camera to which the invention is applicable;

Fig. 8 shows waveform diagrams used for explaining coring;

Fig. 9 shows waveform diagrams used for explaining high luminance compression;

Fig. 10 shows schematic views used for explaining exposure detection areas;

Fig. 11 is a graph used for explaining a knee circuit;

Fig. 12 shows a schematic view and a waveform diagram used for explaining a distribution detector;

Fig. 13 is a functional block diagram used for explaining automatic exposure control;

Fig. 14 shows graphs used for explaining controls of the knee circuit;

Fig. 15 shows schematic views used for explaining one-push auto white balance;

Fig. 16 shows spectrum diagrams used for explaining of a Y separator circuit;

Fig. 17 is a block diagram showing an arrangement of the Y separator circuit for the use of a CCD imaging device with 510 pixels per line;

Fig. 18 is a block diagram showing an arrangement of the Y separator circuit for the use of a CCD imaging device with 760 pixels per line;

Fig. 19 shows schematic views used for explaining the conversion filter;

Fig. 20 is a timing chart used for explaining the conversion filter for the use of a CCD imaging device with 510 pixels per line;

Fig. 21 is a timing chart used for explaining the conversion filter for the use of a CCD imaging device with 760 pixels per line;

Fig. 22 is a frequency characteristic diagram used for explaining the Y separator circuit for the use of a CCD imaging device with 510 pixels per line; and

Fig. 23 is a frequency characteristic diagram used for explaining the Y separator circuit for the use of a CCD imaging device with 760 pixels per line.

## DETAILED DESCRIPTION OF THE PREFERRED EMBODIMENT

An embodiment of the invention is described below, in the following order.

a. Entire Arrangement of Video Camera
b. Optical Detector

    b1. Area Setting Circuit
    b2. Y Separator Circuit and C Separator Circuit
    b3. AF Detector Circuit
    b4. AE Detector Circuit
    b5. AWB Detector Circuit

c. Conversion Filter

c1. Arrangement of Y Separator Circuit

c2. Arrangement of Conversion Filter for the use of CCD Imaging Device with 510 pixels per line

c3. Arrangement of Conversion Filter for the use of CCD Imaging Device with 760 pixels per line

c4. Characteristic of Y Separator Circuit

a. Entire Arrangement of Video Camera

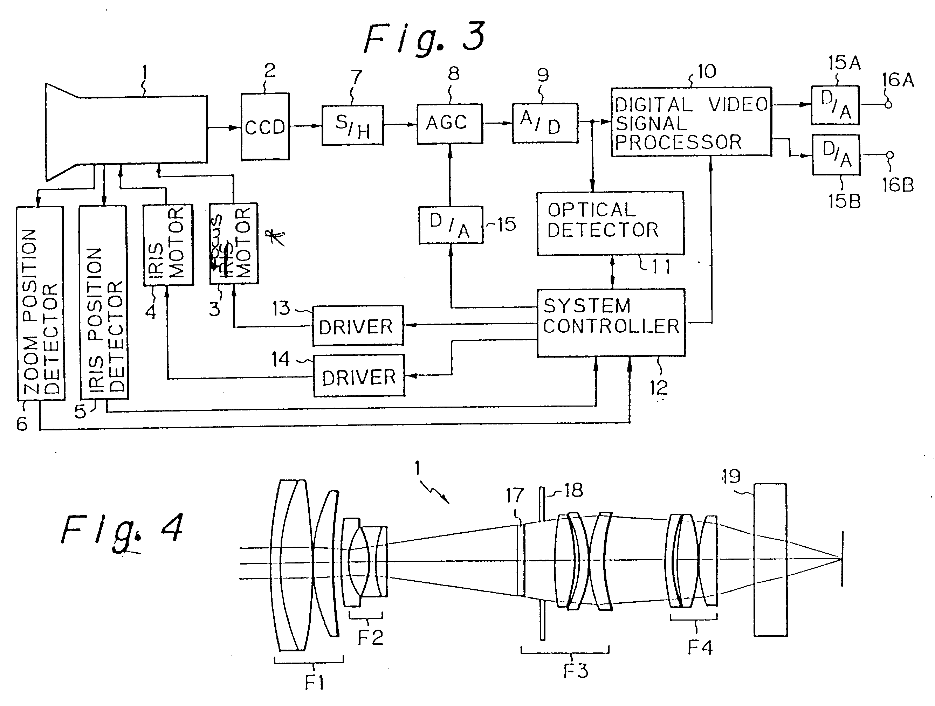

Fig. 3 shows the entire arrangement of a video camera to which the invention is applicable. In Fig. 3, reference numeral 1 refers to a lens and 2 to a CCD imaging device. An image of an object obtained via the lens 1 is formed onto a receptor surface of the CCD imaging device 2, and an imaging signal is obtained from the CCD imaging device 2.

As shown in Fig. 4, the lens 1 includes a fixed lens F1 (first group lenses), zoom lens F2 (second group lenses), fixed lens F3 (third group lenses) and focus lens F4 (fourth group lenses). Between the zoom lens F2 and the fixed lens F3 are provided a PN filter 17 and an iris ring 18. Opposed to the focus lens F4 is provided dummy glass 19 for cutting off an infrared ray.

By moving the focus lens F4, a focus position is obtained. The position of the focus lens F4 is movable by a focus drive motor 3. The focus drive motor 3 may be a step motor so that highly accurate control is carried out easily. The step motor is driven by a driver 13 with a sine wave in order to reduce vibrations and noises. Opening and closing of the iris ring 18 within the lens 1 is controlled by an iris drive motor 4. The opening and closing state of the iris ring 18 is detected by an iris position detector 5 composed of, for example, a Hall element. The position of the zoom lens F2 is detected by a zoom position detector 6. Outputs of the iris position detector 5 and the zoom position detector 6 are supplied to a system controller 12.

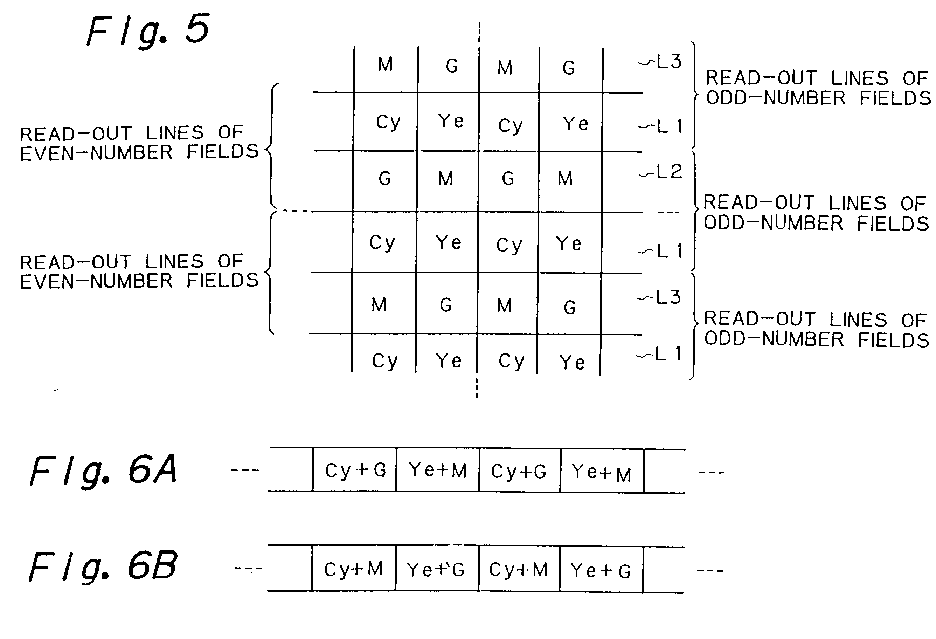

The CCD imaging device 2 may have a pixel arrangement in the form of, for example, a complementary-colored checkered pattern. As shown in Fig. 5, in the CCD imaging device 2, having such a pixel arrangement, lines L1 having repeated cyan (Cy) pixels and yellow (Ye) pixels are disposed every two lines. Lines L2 having repeated green (G) pixels and magenta (M) pixels and lines L3 having repeated magenta (M) pixels and green (G) pixels are alternatively disposed between the lines L1 having repeated cyan (Cy) pixels and yellow (Ye) pixels.

As the number of pixels of the CCD imaging device 2, one having 510 pixels per line and one having 760 pixels per line, for example, may be used. When a CCD imaging device having 510 pixels per line is used, a transfer clock of frequency (8/3) fsc ($\fallingdotseq$ 9.55 MHz) is applied to the CCD imaging device 2. When a CCD imaging device having 760 pixels per line is used, a transfer clock of frequency 4 fsc ($\fallingdotseq$ 14.32 MHz) is applied to the CCD imaging device 2.

An output of the CCD imaging device 2 is supplied to a sample and hold circuit 7. In case a pixel arrangement on a complementary colored checkered pattern is employed for the CCD imaging device 2, output signals of the CCD imaging device 2 output by every two pixels are sample and held in the sample and hold circuit 7. An output of the sample and hold circuit 7 is supplied to an A/D converter 9 via an AGC circuit 8. The output of the CCD imaging device 2 is digitalized in, for example, 10 bits by the A/D converter 9.

An output of the A/D converter 9 is supplied to both a digital video signal processing circuit 10 and an optical detector 11. The optical detector 11 produces an AF (auto focus) detection signal for auto focus control, an AE (auto exposure) detection signal for automatic exposure, and an AWB (auto white balance) detection signal for auto white balance.

The optical detector 11 and the system controller 12 are connected in a bi-directional relationship via a serial interface. Through the serial interface, the optical detector 11 and the system controller 12 give and take signals in, for example, every vertical period intervals. The system controller 12 supplies the optical detector 11 with a focus detection area setting signal, an exposure detection area setting signal, a white balance detection area setting signal and so on. The optical detector 11 supplies the system controller 12 with an AF detection signal, and AE detection signal, and AWB detection signal and so on.

Based on the AF detection signal supplied from the optical detector 11 to the system controller 12, the system controller 12 outputs a lens drive signal. The lens drive signal is supplied to the focus drive motor 3 via the driver 13. As a result, the position of the focus lens F4 is controlled to situate at a focus position.

Based on the AE detection signal supplied from the optical detector 11 to the system controller 12, the system controller 12 outputs both an iris control signal and an AGC control signal. The iris control signal is supplied to the iris drive motor 4 via the driver 14. The AGC control signal is supplied to the AGC circuit 8 via the D/A converter 15. As a result, the iris ring 18 is opened and closed in response to the level of the imaging signal from the CCD imaging device 2 and, at the same time, the gain of the AGC circuit 8 is determined.

The luminance signal and a chrominance signal are processed in the digital video signal processing circuit 10. The processed luminance signal and chrominance signal are converted into analog signals via D/A converters 15A and 15B, respectively, and are output from output terminals 16A and 16B, respectively.

b. Optical Detector

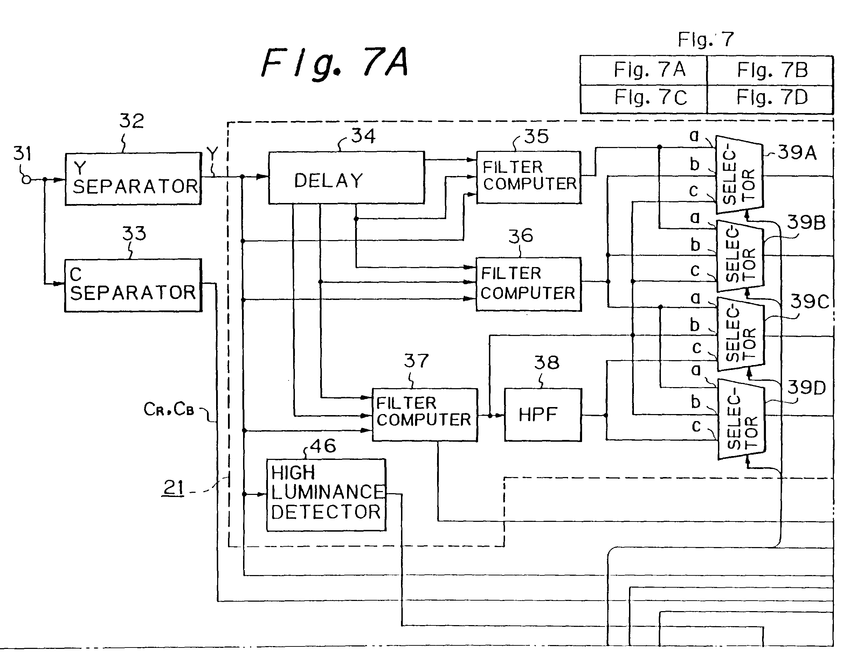

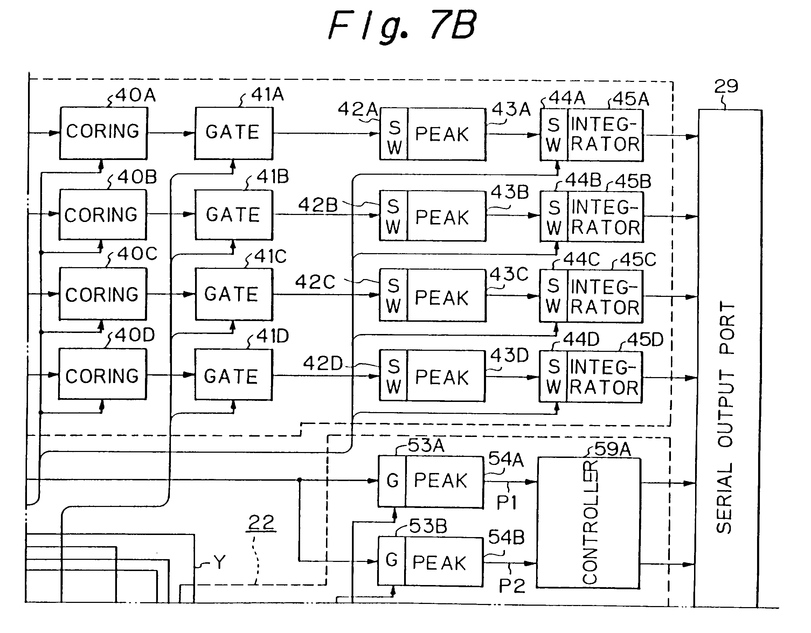

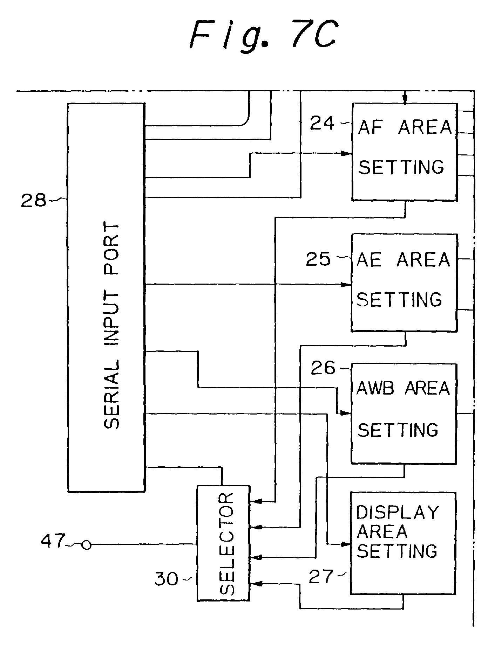

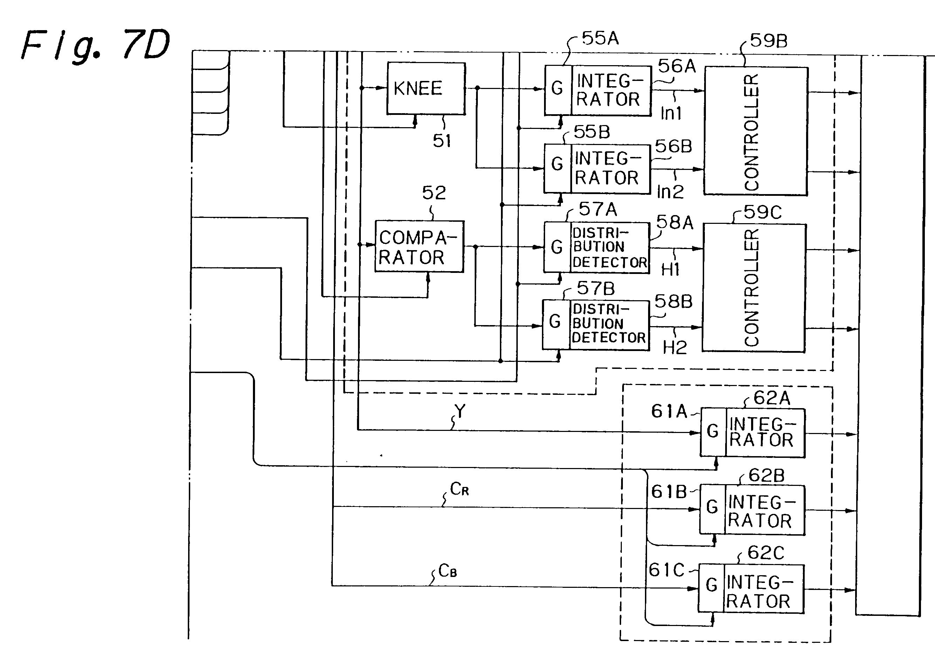

Fig. 7 shows an arrangement of optical detector 11.

The optical detector 11 produces detection signals for optical controls such as AF detection signal for auto focus control, AE detection signal for automatic exposure, AWB detection signal for auto white balance, and so on, as described before. In the optical detector 11 are provided an AF detector circuit 21, an AE detector circuit 22 and an AWB detector circuit 23 which are shown by broken line blocks.

b1. Area Setting Circuit

Optical detector 11 includes an AF area setting circuit 24 for setting a focus detection area for carrying out auto focus, an AE area setting circuit 25 for setting an exposure detection area for automatic exposure, and an AWB area setting circuit 26 for setting a white balance detection area for auto white balance control. Optical detector 11 further includes a display area setting circuit 27 for setting a display area.

AF area setting circuit 24, AE area setting circuit 25 and AWB area setting circuit 26 are supplied with a focus detection area setting signal, an exposure detection area setting signal and a white balance detection area setting signal from the system controller 12 via the serial input port 28.

Based on the focus detection area setting signal, the AF area setting circuit 24 determines, for example, two focus detection areas. Based on the exposure detection area setting signal, the AE area setting circuit 25 defines, for example, two exposure detection areas. Based on the white balance detection area setting signal, the AWB area setting circuit 26 defines a white balance detection area. The positions and dimensions of these areas may be determined as desired.

Further, the display area setting circuit 27 is supplied with a display area setting signal from the system controller 12 via the serial input port 28. The position and dimension of the display area may be determined as desired.

Outputs of the AF area setting circuit 24, AE area setting circuit 25, AWB area setting circuit 26 and display area setting circuit 27 can selectively be output from an output terminal 47 via a selector 30. The selector 30 may also select a signal for defining a plurality of areas. The area based on the area setting signal selected by the selector 30 is displayed on a finder. Therefore, it is possible for the finder to display either the same area as that being used for control or the area different from that being used for control.

Further, using the display area, intake positions of a titler, etc., an intake position of an electronic zoom, etc. may be designated.

The system controller 12 is supplied with the AF detection signal, AE detection signal and AWB detection signal from the optical detector 11 via a serial output port 29.

b2. Y Separator Circuit and C Separator Circuit

In Fig. 7, the digital imaging signal from the A/D converter 9 in Fig. 3 is supplied to an input terminal 31. The digital imaging signal is supplied to both a Y separator circuit 32 and a C separator circuit 33. The Y separator circuit 32 produces a digital luminance signal Y from the digital imaging signal. The C separator circuit 33 produces chrominance signals $C_R$ and $C_B$ from the digital imaging signal.

As described before, the CCD imaging device 2 may be of the pixel arrangement in the form of a complementary colored checkered pattern as shown in Fig. 5. The sample and hold circuit 7 sample and holds the signal which is output for every two pixels, and an output corresponding to two pixels added in the vertical direction is output from the sample hold circuit 7.

In case of the pixel arrangement shown in Fig. 5, when the added output corresponding to two pixels in the vertical direction is output, two lines shown in Figs. 6A and 6B are repeated every two lines: the line in Fig. 6A being composed of repetition of a sum signal (Cy + G) of cyan (Cy) and green (G) and a sum signal (Ye + M) of yellow (Ye) and magenta (M), and the line in Fig. 6B being composed of repetition of a sum signal (Cy + M) of cyan (Cy) and magenta (M) and a sum signal (Ye + G) of yellow (Ye) and green (G).

In Fig. 7, signals different by 1 sample are subtracted in C separator circuit 33. As a result, chrominance signals $C_R$ and $C_B$ are formed.

More specifically, in the line (Fig. 6A) in which the sum signal (Cy + G) of cyan and green and the sum signal (Ye + M) of yellow and magenta are output alternately, by subtracting signals different by 1 sample, the chrominance signal $C_R$ is obtained in the following manner.

Since

$$Ye = R + G, M = R + B \text{ and } Cy = B + G,$$

$$(Ye + M) - (Cy + G)$$

$$= ((R + G) + (R + B)) - ((B + G) + G)$$

$$= 2R - G$$

$$= C_R$$

In the line (Fig. 6B) in which the sum signal (Cy + M) of cyan and magenta and the sum signal (Ye + G) of yellow and green are output alternately, by subtracting signals different by 1 sample, the chrominance signal $C_B$ is obtained in the following manner.

$$(Ye + G) - (Cy + M)$$

$$= ((R + G) + G) - ((B + G) + (R + B))$$

$$= -2B + G$$

$$= -C_B$$

Signals which are different one another by 1 sample are added in the Y separator circuit 32. As a result, the luminance signal Y is formed.

More specifically, in the line (Fig. 6A) in which the sum signal (Cy + G) of cyan and green and the sum signal (Ye + M) of yellow and magenta are output alternately , by adding signals different by 1 sample, the luminance signal Y is obtained in the following manner.

$$(Ye + M) + (Cy + G)$$

$$= ((R + G) + (R + B)) + ((B + G) + G)$$

$$= 3G + 2R + 2B$$

$$= Y$$

In the line (Fig. 6B) in which the sum signal (Cy + M) of cyan and magenta and the sum signal (Ye + G) of yellow and green are output alternately , by adding signals different by 1 sample, the luminance signal Y is obtained in the following manner.

$$(Ye + G) + (Cy + M)$$

$$= ((R + G) + G) + ((B + G) + (R + B))$$

$$= 3G + 2B + 2R$$

$$= Y$$

Further, the Y separator circuit 32 and the C separator circuit 33 perform conversion of the sampling frequency. More specifically, the input terminal 31 is supplied with a digital signal of sampling frequency (8/3) fsc in case of using a CCD imaging device 2 with 510 pixels per line or a digital signal of sampling frequency 4 fsc in case of using a CCD imaging device 2 with 760 pixels per line. The sampling frequency (8/3) fsc or 4 fsc is converted into sampling frequency 2 fsc in the Y separator circuit 32 and the C separator circuit 33.

An output of the Y separator circuit 32 is supplied to the AF detector circuit 21, AE detector circuit 22 and AWB detector circuit 23. An output of the C separator circuit 33 is supplied to the AWB detector circuit 23.

b3. AF Detector Circuit

At a focus position, the level of intermediate and high range component in the luminance signal from the CCD imaging device 2 is maximized. Therefore, by regarding as an evaluated value the integrated level of the intermediate and high range component in the luminance signal from the CCD imaging device 2, within a predetermined focus area and by controlling the position of the focus lens F4 to maximize the evaluated value, the focus position is obtained.

According to an embodiment of the invention, focus control is performed on the basis of this principle.

More specifically, in the AF detector circuit 21, three kinds of high pass filters having different characteristics are composed of a delay circuit 34 and filter computing portions 35, 36 and 37. The high pass filter composed of the delay circuit 34 and the filter computing portion 37, and the high pass filter 38 are cascade connected. As a result, four kinds of high pass filters having different characteristics are composed. The intermediate and high range component in the luminance signal is extracted by these high pass filters.

When the characteristics of the high pass filters vary, the characteristics indicative of the relationship between the lens position and the evaluated value also vary. In case that the characteristic is moderate, the range capable of controlling into the focus position is expanded: however, a precise focus position is difficult to obtain. In contrast, in case that the characteristic is sharp, a precise focus position can be obtained; however, the range capable of controlling into the focus position is narrowed.

Therefore, in order for the focus lens F4 to be precisely controlled into the focus position over a wide range, the switching use of a plurality of high pass filters having different characteristics is effective. More specifically, by moving the lens to the proximity to the focus position by means of a high pass filter whose characteristic indicative of the relationship between the lens position and the evaluated value is moderate, and, after the lens is moved to the proximity to the focus position, by switching to and using a high pass filter whose characteristic indicative of the relationship between the lens position and the evaluated value is sharp, control is performed to force the lens into the focus position.

According to one embodiment of the invention, it is so designed that outputs of these four kinds of high pass filters having different characteristics can selectively be output by selectors 39A to 39D.

More specifically, an output of the filter computing portion 35 is supplied to a-side input terminals of the selector 39A and the selector 39B. An output of the filter computing portion 36 is supplied to both b-side input terminals of the selectors 39A and 39B and a-side input terminals of the selectors 39C and 39D. An output of the filter computing portion 37 is supplied to both c-side input terminals of the selectors 39A and 39B and b-side input terminals of the selectors 39C and 39D. An output of the high pass filter 38 is supplied to c-side input terminals of the selectors 39C and 39D. By switching the selectors 39A to 39D, a filter output of a desired characteristic can be selected. The selectors 39A to 39D are switched on the basis of a filter select signal supplied from the system controller 12 via the serial input port 28.

Outputs of the selectors 39A to 39D are supplied to coring circuits 40A to 40D, respectively. The coring circuits 40A to 40D are also supplied with coring level setting signals from the system controller 12 via the serial input port 28. The coring circuits 40A to 40D detect an intermediate and high range component of the digital luminance signal and remove a noise component.

More specifically, since almost no high range component in the luminance signal from the CCD imaging device 2 is present in case of a picture having a simple image, affection of noise to the signal is increased. The coring circuits 40A to 40D are provided to prevent such affection by a noise.

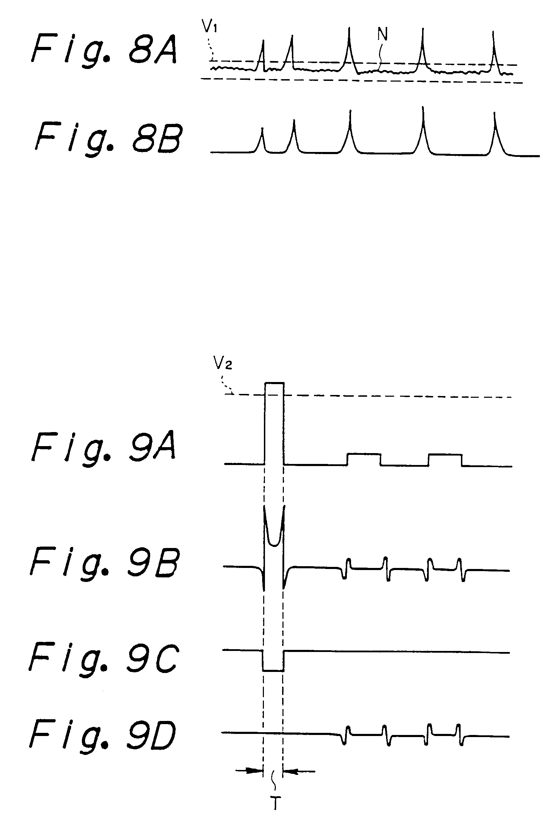

In other words, if a noise component N is present in the output signal of the digital high pass filter as shown in Fig. 8A, the presence of the noise component causes an error in the focus detection signal. The coring circuits 40A to 40D remove a noise component N below a predetermined coring level $v_1$, as shown in Fig. 8B. The coring circuits 40A to 40D may be composed of subtracters. The coring level $v_1$ may be varied.

The coring level $v_1$ may be varied according to the picture and so on, in lieu of a constant value.

The outputs of the coring circuits 40A to 40D are supplied to the gate circuits 41A to 41D, respectively. The gate circuits 41A to 41D are also supplied with a gate signal from the AF area setting circuit 24 for setting the focus detection area. The gate signal controls opening and closing of the gate circuits 41A to 41D.

In case that an object containing a high brightness portion such as point light source is photographed, an error possibly occurs in the evaluated value by the signal of the high brightness portion. In this connection, a high brightness detector circuit 46 is provided. The high brightness detector circuit 46 detects whether the imaging signal from the CCD imaging device 2 is above a predetermined level or not. An output of the high brightness detector circuit 46 is supplied to the AF area setting circuit 24 and, if the imaging signal from the CCD imaging device 2 is above the predetermined level, a corresponding focus detection area is masked.

For example, as shown in Fig.9A, it is assumed that a high luminance signal above a predetermined value $v_2$ is output from the CCD imaging device 2. In this case, a signal as shown in Fig. 9B is output from the digital high pass filter. In the period T where the output of the CCD imaging device 2 is above the predetermined value $v_2$, a masking signal is output as shown in Fig. 9C. During the masking signal, the gate circuits 41A to 41D are closed. As a result, the effect of the high brightness portion is removed as shown in Fig. 9D.

Outputs of the gate circuits 41A to 41D are supplied to peak detector circuits 43A to 43D, respectively, via switch circuits 42A to 42D, respectively. The peak detector circuits 43A to 43D detect peak values of the outputs of the gate circuits 41A to 41D. Outputs of the peak detector circuits 43A to 43D are supplied to integrator circuits 45A to 45D, respectively, via switch circuits 44A to 44D, respectively. The integrator circuits 45A to 45D obtain integrated values of outputs of the gate circuits 41A to 41D or outputs of the peak detector circuits 43A to 43D.

By controlling the switch circuits 42A to 42D and 44A to 44D, not only an integrated value (evaluated value) of the intermediate and high range component in the luminance signal in one picture but also, for example, a peak value of the intermediate and high range component in the luminance signal in one line and an integrated value of the peak values of the intermediate and high range component in one picture can be obtained. The integrated value of the peak value of the intermediate and high range component in the luminance signal in one line and the integrated value of the peak values of the intermediate and high range component in one picture can be used for determining the timing for switching the high pass filters. Their outputs are supplied as the AF detection signal to the system controller 12 via the serial output port 29.

In the focus control circuit, focus control is carried out by defining, for example, two focus detection areas. More specifically, every two outputs of four filter outputs output from the selectors 39A to 39D are set in the same focus detection area. One of the outputs from two of the selectors 39A to 39D which have been set in the same focus detection area is used for obtaining the integrated value (evaluated value) of the intermediate and high range component level in the luminance signal in the focus detection area, and the other is used for detecting the timing for switching the characteristics of the high pass filters. Based on the evaluated value from each focus detection area, the focus lens F4 is moved until it approaches the proximity to the focus position where the selectors 39A to 39D are switched to change the filter characteristics. Then the focus lens F4 is positionally controlled to maximize the evaluated value.

When a plurality of focus detection areas are set in this manner, any camera angle provides precise focusing to an object. Focusing while following a moving object is also possible.

b4. AE Detector Circuit

AE control is carried out by opening and closing the iris ring 18 and by setting the gain of the AGC circuit 8 so that the level of the luminance signal from the CCD imaging device 2 may be a predetermined value.

For example, since the brightness level of the background becomes very high in a counterlight condition, if the AE control is carried out by detecting the luminance signal level in a predetermined exposure detection area, the aperture of the iris ring 18 is decreased, which causes the gain of the AGC circuit 8 to be set at a small value, which in turn causes a problem that the object image appears dark.

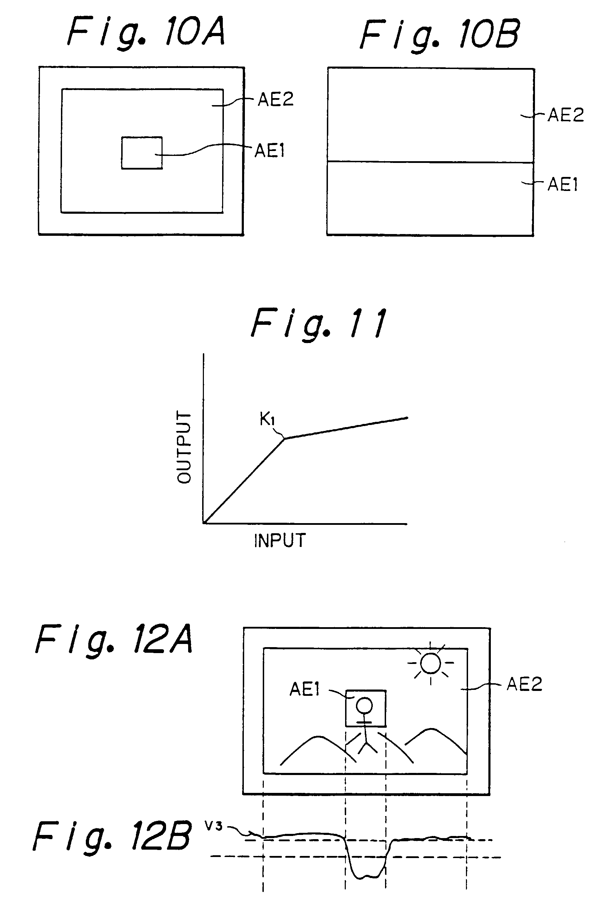

In order to ensure optimum AE control even under a counterlight condition or in an excessive forward-light condition, an embodiment of the invention is arranged to define an exposure detection area AE1 and an exposure detection area AE2, as shown in Fig. 10, to detect respective luminance signal levels of the exposure detection areas AE1 and AE2. The positions and dimensions of the exposure detection areas AE1 and AE2 may be determined, as desired, by an exposure detection area setting signal from the system controller 12. As shown in Fig. 10A, the exposure detection area AE1 may be provided in a central portion where an object is present, with the exposure detection area AE2 being provided at a peripheral portion. Alternatively, as shown in Fig. 10B, the exposure detection area AE1 may be provided at a lower portion where an object is present, with the exposure detection area AE2 being provided at an upper portion.

In Fig. 7, an output of the Y separator circuit 32 is supplied to both a knee circuit 51 and a comparator 52. The comparator 52 is also supplied with a comparison level via the serial input port 28.

An output of the filter computing portion 37 is supplied to the peak detector circuits 54A and 54B via gate circuits 53A and 53B, respectively.

The filter computing portion 37 outputs a luminance signal from which a high range noise component has been removed by a low pass filter. More specifically, in case of performing peak detection, a low pass filter must be provided for removing a noise component. Since a digital high pass filter based on a digital averaging low pass filter is composed of the delay circuit 34 and the filter computing portion 37, both a high pass filter output and a low pass filter output can readily be extracted from the filter computing portion 37. A luminance signal from which a high range noise component is removed by the low pass filter is supplied to the peak detector circuits 54A and 54B via the gate circuits 53A and 53B, respectively.

The gate circuits 53A and 53B are supplied with a gate signal from the AE detection area setting circuit 25 for defining the exposure detection areas AE1 and AE2. The gate signal controls opening and closing of the gate circuits 53A and 53B.

The knee circuit 51 makes the digital luminance signal have a nonlinear characteristic as shown in Fig. 11. If average-detecting the luminance signal level as it is, the averaged output is increased by a high brightness portion in one part of the picture, which results in a dark appearance of the entire picture. By using the knee circuit 51, the gain of the high brightness portion is decreased, and the problem mentioned above is improved. The knee circuit 51 is supplied with a characteristic setting signal from the system controller 12 via the serial input port 28. The characteristic setting signal permits a turning point $k_1$ of the characteristic curve to vary.

An output of the knee circuit 51 is supplied to integrator circuits 56A and 56B via gate circuits 55A and 55B, respectively. The gate circuits 55A and 55B are also supplied with a gate signal from the AE area setting circuit 25 for setting the exposure detection areas AE1 and AE2. The gate signal controls opening and closing of the gate circuits 55A and 55B.

The comparator 52 counts the number of samples of the luminance signal above a predetermined level and detects the brightness distributed condition. An output of the comparator 52 is supplied to distribution detectors 58A and 58B via gate circuits 57A and 57B, respectively. The number of samples of the luminance signal above the predetermined brightness level is counted in the distribution detectors 58A and 58B. The gate circuits 57A and 57B are provided with a gate signal from the AE area setting circuit 25 for defining the exposure detection areas AE1 and AE2. The gate signal controls opening and closing of the gate circuits 57A and 57B.

The distribution state of the luminance signal level can be detected by the distribution detectors 58A and 58B. More specifically, when a picture of a counter-light condition as shown in Fig. 12A is photographed, high luminance signal portions are distributed most along the periphery whereas low luminance signal portions are distributed most in the central portion. This distribution state can be decided by the count value of the number of samples above a predetermined level $v_3$ in the exposure detection area AE1 and the count value of the number of samples above the predetermined level $v_3$ in the exposure detection area AE2.

Luminance signal peak values P1 and P2 in the exposure detection areas AE1 and AE2 obtained by the peak detectors 54A and 54B are output to the serial output port 29 via an output controller 59A.

Integrated values In1 and In2 of the luminance signal levels in the exposure detection areas AE1 and AE2 obtained by the integrator circuits 56A and 56B are output to the serial output port 29 via a controller 59B.

Count values H1 and H2 of the number of samples above the predetermined level in the exposure area obtained by the distribution detectors 58A and 58B are output to the serial output port 29 via an output controller 59C.

An average-detected output of the luminance signal is obtained in the integrator circuits 56A and 56B. Upon performing the AE control, since the average detection causes a low detection level, it requires a characteristic near the peak detection rather than the average detection. In this connection, an embodiment of the invention is arranged to detect a luminance signal level with a characteristic near the peak detection by appropriately mixing average and peak values.

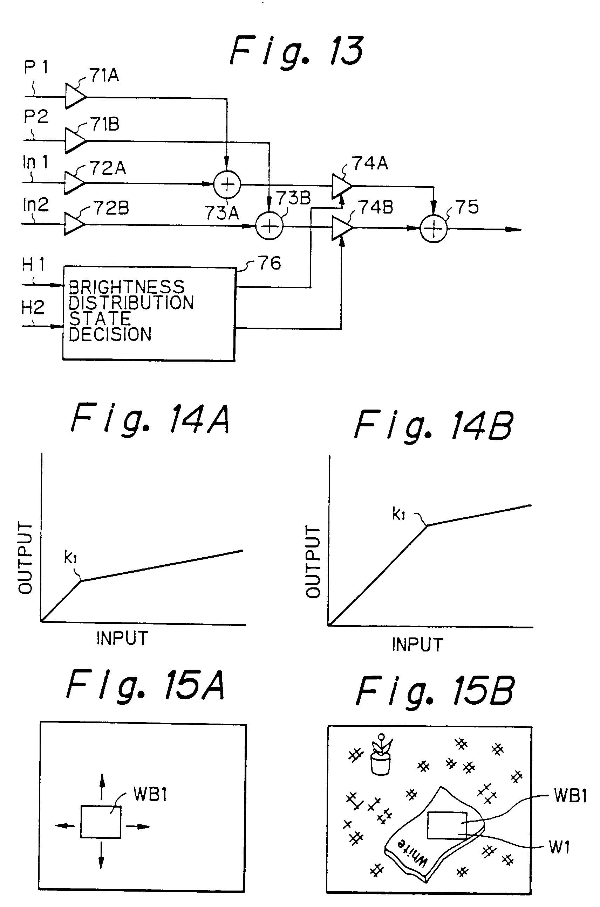

More specifically, as shown in the functional block diagram of Fig. 13, the peak values P1 and P2 obtained by the peak detector circuits 54A and 54B, and the integrated values In1 and In2 obtained by the integrator circuits 56A and 56B are weighted and added by multiplier means 71A, 71B and 72A, 72B and adder means 73A and 73B. As a result, a detection characteristic near peak detection is obtained. By changing the coefficients of the multiplier means 71A and 71B and the multiplier means 72A and 72B, the detection level may be varied. These computations are carried out by software, and the detection level can therefore be changed very easily.

According to the value obtained by appropriately weighting and adding the detection value of the luminance signal level in the exposure detection area AE1 and the detection value of the luminance signal level in the exposure detection area AE2, opening and closing of the iris ring 18 and the gain of the AGC circuit 8 are determined.

More specifically, the detection value of the luminance signal level in the exposure detection area AE1 and the detection value of the luminance signal level in the exposure detection area AE2 are obtained from the adder means 73A and 73B, respectively. Outputs of the adder means 73A and 73B are supplied to multiplier means 74A and 74B, respectively. Outputs of the multiplier means 74A and 74B are supplied to adder means 75. The detection value of the luminance signal level in the peripheral exposure detection area AE1 and the detection value of the luminance signal level in the central exposure detection area AE2 are weighted and added by the multiplier means 74A, 74B and the adder means 75. The opening-closing state of the iris ring 18 and the gain of the AGC circuit 8 are determined according to an output of the adder means 75.

Forward-light condition, counterlight condition and excessive forward-light condition are discriminated from the outputs of the distribution detectors 58A and 58B (Fig. 7).

Specifically, since forward light condition results in a substantially uniform brightness throughout the entire picture, distribution of the luminance signal level is substantially even in the exposure detection area AE1 in the portion of an object and in the exposure detection area AE2 in the peripheral portion. In other words, the difference between the output H1 of the distribution detector 58A and the output H2 of the distribution detector 58B is not large.

In contrast, since counterlight condition results in the background being extremely bright, luminance signal levels above a predetermined value are distributed most in the peripheral exposure detection area AE2. Further, since excessive forward-light condition results in the background being extremely dark, luminance signal levels below a predetermined value are distributed most in the exposure detection area AE1 where the object is located. Thus the difference between the output H1 of the distribution detector 58A and the output H2 of the distribution detector 58B is large in counterlight and excessive forward-light conditions.

Outputs H1 and H2 of the distribution detectors 58A and 58B are supplied to brightness distribution state deciding means 76 in Fig. 13. The brightness distribution state deciding means 76 detects whether it is in forward-light condition, counterlight condition or excessive forward-light condition. Responsively to an output of the brightness distribution state deciding means 76 and according to such counterlight or excessive forward-light condition, the following control is carried out.

Responsively to the output of the brightness distribution state deciding means 76, coefficients of the multiplier means 74A and 74B are determined. In counterlight and excessive forward-light conditions, the coefficient of the multiplier means 74A for weighting the brightness of the object portion is set in a large value whereas the coefficient of the multiplier means 74B for weighting the brightness of the background portion is set in a small value. As a result, control approaches center-emphasized photometry, and optimum AE control is performed even under counterlight or excessive forward-light condition.

Positions and dimensions of the exposure detection areas AE1 and AE2 are determined according to the output of the brightness distribution state deciding means 76. Specifically, under forward-light condition as shown in Fig. 10B, the exposure detection area is divided into upper and lower portions, the lower portion being the exposure detection area AE1 for the object and the upper portion being the exposure detection area AE2 for the background. In this manner, no variation occurs in the brightness even during panning. In counterlight and excessive forward-light conditions as shown in Fig. 10A, the exposure detection area AE1 including the object is located at the center whereas the exposure detection area AE2 for the background is located in the periphery. In addition to this, the exposure detection area AE1 including the object is decreased. In this manner, control becomes closer to center-emphasized photometry.

Further, the output of the brightness distribution state deciding means 76 may be used to determine the turning point of the knee circuit 51. Specifically, under counterlight condition, as shown in Fig. 14A, the turning point $k_1$ is shifted down. In this manner, since the gain under high brightness is decreased, the object never appears dark even under counterlight condition. In case of excessive forward-light condition, as shown in Fig. 14B, the turning point $k_1$ of the knee circuit 51 is raised. As a result, since the gain under high brightness is increased, the object never saturates even under excessive forward-light condition.

Further, if the gain of the entire control system is set according to the output of the brightness distribution state deciding means 76, the object never appears dark even under counterlight condition and never saturates even under excessive forward-light condition.

Note that all of the controls responsive to the counterlight condition and excessive forward-light condition are not required. Problems with counterlight and excessive forward-light conditions are solved by combining some of these controls.

b5. AWB Detector Circuit

White balance control is carried out by controlling the levels of red (R), green (G) and blue (B) color signals to represent a predetermined ratio.

One embodiment of the invention can perform full auto white balance control and one-push auto white balance control. The full auto white balance control performs white balance control fully automatically, regarding the integrated value of the entire picture to be white.

One-push auto white balance displays a white balance detection area WB1 as shown in Fig. 15. The position and dimension of the white balance detection area WB1 can be varied as desired, as shown in Fig. 15A. As shown in Fig. 15B, when the white balance detection area WB1 is located on the white part W1 of the object and a one-push auto white balance setting button is pressed, white balance control is carried out on the basis of a signal from the white balance detection area WB1.

Since the position and dimension of the white balance detection area WB1 can be changed as desired, white balance control can be effected, using a white portion of any object such as white part of clothes or the like. Therefore, it is not necessary to perform white balance adjustment using a white cap, etc. The white balance control using a white portion provides more precise white balance adjustment than white balance control regarding the integrated value of the entire picture to be white.

White balance control may be carried out by setting a plurality of white balance detection areas and selecting one of them approximating the black body radiation curve.

In Fig. 7, the luminance signal Y from the Y separator circuit 32 is supplied to the integrator circuit 62A via the gate circuit 61A. The chrominance signals $C_R$ and $C_B$ from the C separator circuit 33 are supplied to the integrator circuits 62B and 62C via the gate circuits 61B and 61C, respectively. Outputs of the integrator circuits 62A to 62C are supplied, as AWB detection signals, to the system controller 12 via the serial output port 29.

The gate circuits 61A to 61C are provided with a gate signal for defining the white balance detection area from the AWB detection area setting circuit 26. The gate signal controls opening and closing of the gate circuits 61A to 61C to determine the white balance detection area. In case of auto white balance, the white balance detection area is set wide. In case of one-push auto white balance, the white balance detection area is set variable according to white part of the object.

The system controller 12 is provided with the integrated values of the luminance signal Y and the chrominance signals $C_R$ and $C_B$. White balance control is carried out on the basis of the integrated value of luminance signal Y and chrominance signals $C_R$ and $C_B$ as follows.

Integrated values of luminance signal Y, chrominance signals $C_R$ and $C_B$ are referred to as $IN(Y)$, $IN(C_R)$ and $IN(C_B)$. By subtracting integrated values $IN(C_R)$ and $IN(C_B)$ of the chrominance signals $C_R$ and $C_B$ from the integrated value $IN(Y)$ of the luminance signal Y, integrated value $IN(G)$ of the green (G) color signal is obtained as follows.

$$IN(Y) - IN(C_R) - IN(C_B)$$

$$= IN(3G + 2R + 2B) - IN(2R - G) - IN(2B - G)$$

$$= IN(5G)$$

By subtracting from the integrated value $IN(C_R)$ of the chrominance signal $C_R$ the integrated value $IN(G)$ of the green (G) color signal obtained in the foregoing process, integrated value $IN(R)$ of the red (R) color signal is obtained as follows.

$$IN(C_R) + IN(G)$$

$$= IN(2R - G) + IN(G)$$

$$= IN(2R)$$

By subtracting from the integrated value $IN(C_B)$ of the chrominance signal $C_B$ the integrated value $IN(G)$ of the green (G) color signal obtained in the foregoing process, integrated value $IN(B)$ of the blue (B) color signal is obtained as follows.

$$IN(C_B) + IN(G)$$

$$= IN(2B - G) + IN(G)$$

$$= IN(2B)$$

Gains of respective three-component color signals R, G and B are determined to establish a predetermined ratio of integrated values of levels of the three-component color signals R, G and B obtained in foregoing processes.

c. Conversion Filter

As described above, according to the embodiment of the invention, the digital luminance signal Y is formed from the luminance signal from the CCD imaging device 2 in the Y separator circuit 32 of Fig. 7. Further, the sampling frequency is converted in the Y separator circuit 32.

More specifically, as described above, the sampling frequency of the digital luminance signal is (8/3) fsc for use of a CCD imaging device 2 with 510 pixels per line and 4 fsc for use of a CCD imaging device 2 with 760 pixels per line.

In the optical detector 11, signal processing is carried out at sampling frequency 2 fsc. Therefore, conversion from sampling frequency (8/3) fsc into sampling frequency 2 fsc or conversion from sampling frequency 4 fsc into sampling frequency 2 fsc is carried out in the Y separator circuit 32.

Such conversion of the sampling frequency involves a possibility of aliasing. More specifically, in case that a CCD imaging device 2 with 760 pixels per line is used, the sampling frequency is 4 fsc, and the imaging signal therefore includes luminance signal components up to frequency 2 fsc. If such signal is re-sampled at sampling frequency 2 fsc, aliasing occurs about frequency fsc. If, in particular, the sampling frequency is converted from 4 fsc into 2 fsc, a high range component at frequency 2 fsc is folded back into a DC component, which may cause a large error in the evaluated value.

Therefore, in order to perform conversion of the sampling frequency in the Y separator circuit 32, a high range component which is folded back into, in particular, a low range must be suppressed.

c1. Arrangement of Y Separator Circuit

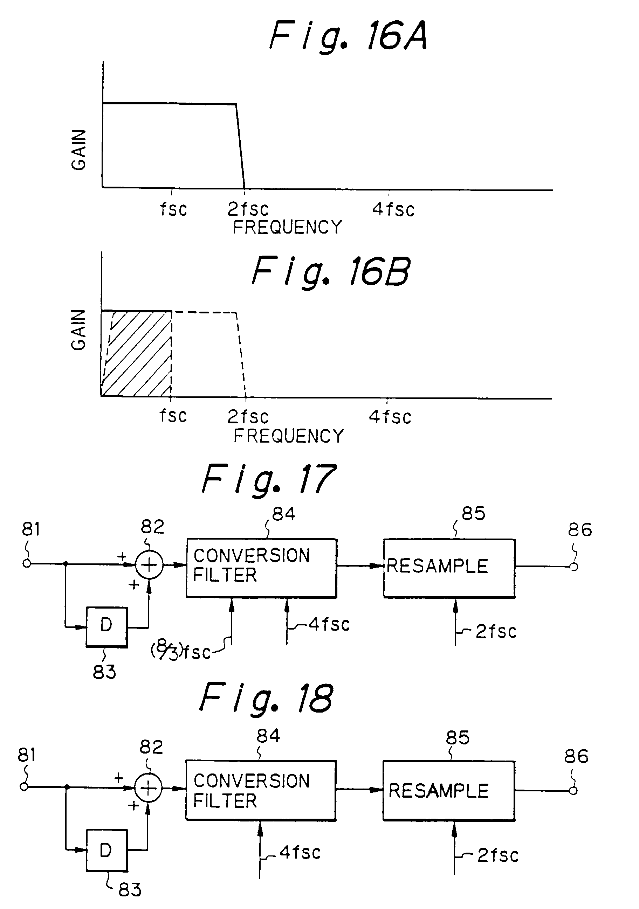

Figs. 17 and 18 show arrangements of the Y separator circuit 32. Fig. 17 depicts an arrangement using a CCD imaging device 2 with 510 pixels per line whereas Fig. 18 shows an arrangement using a CCD imaging device 2 with 760 pixels per line.

In Fig. 17, the digital imaging signal from the CCD imaging device 2 is supplied to an input terminal 81. The digital imaging signal is also supplied to an adder 82 both directly and through a delay circuit 83. Signals different by one sample are added in the adder 82. As a result, the digital luminance signal Y is formed as described above.

The digital luminance signal Y is supplied to a conversion filter 84. When a CCD imaging device 2 with 510 pixels per line is used, a clock of frequency (8/3) fsc and a clock at 4 fsc are supplied to the conversion filter 84. The conversion filter 84 converts the sampling frequency from (8/3) fsc into 4 fsc, and removes frequency components around frequency (4/3) fsc.

An output of the conversion filter 84 is supplied to a re-sampling circuit 85 which is provided with a clock of frequency 2 fsc. The digital luminance signal of frequency 4 fsc output from the conversion filter 84 is re-sampled with the clock of frequency 2 fsc in the re-sampling circuit 85. An output of the re-sampling circuit 85 is extracted from an output terminal 86.

When a CCD imaging device 2 with 760 pixels per line is used, the clock of frequency 4 fsc is supplied to the conversion filter 84 as shown in Fig. 18. Frequency components around frequency 2 fsc are removed by the conversion filter 84. The digital luminance signal of frequency 4 fsc output from the conversion filter 84 is re-sampled with the clock of frequency 2 fsc in the re-sampling circuit 85.

c2. Arrangement of Conversion Filter for Use of CCD

Imaging Device with 510 Pixels per line

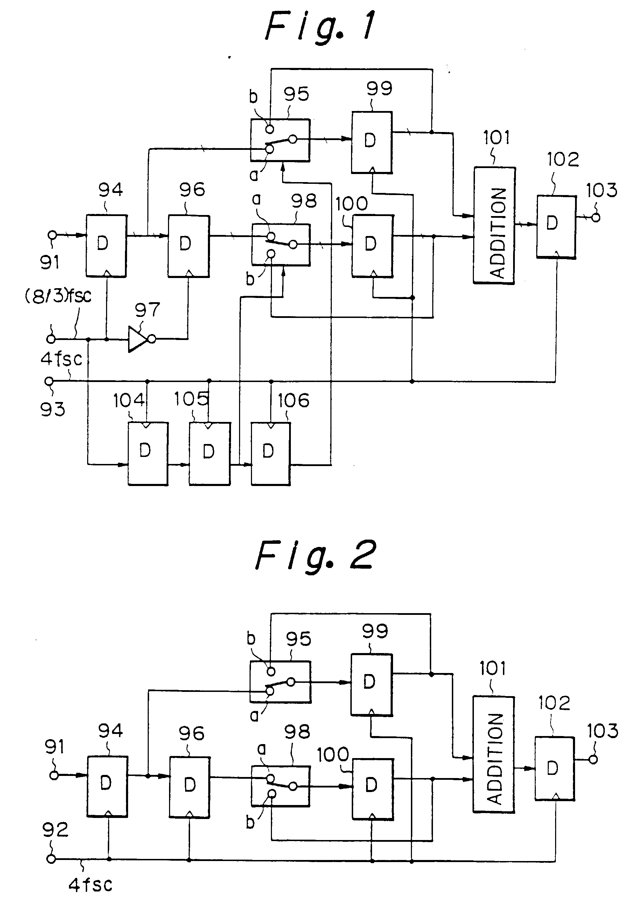

Figs. 1 and 2 show arrangements of the conversion filter 84. When a CCD imaging device 2 with 510 pixels per line is used, the conversion filter 84 converts the sampling frequency from (8/3) fsc into 4 fsc and removes frequency components around (4/3) fsc. When a CCD imaging device 2 with 760 pixels per line is used, the conversion filter 84 removes frequency components around frequency 2 fsc.

Fig. 1 depicts an arrangement using a CCD imaging device 2 with 510 pixels per line. In this case, digital luminance signals $A_1$, $A_2$, $A_3$, ... from the CCD imaging device 2 are supplied to an input terminal 91. The conversion filter 84 of Fig. 1 sequentially produces data $(A_1 + A_2)$, $2A_2$, $2A_3$, $(A_3 + A_4)$, $2A_4$, ... from the digital luminance signals $A_1$, $A_2$, $A_3$, ...

Such data outputs are equivalent to a result obtained by over-sampling a digital signal of (8/3) fsc at frequency 8 fsc, then extracting the over-sampled digital signal through a filter having the following characteristics:

$$H(Z) = (HZ^{-1} + Z^{-2}) (HZ^{-1})/6$$

$$H(Z) = (1 + 2Z^{-1} + 2Z^{-2} + Z^{-3})/6 \tag{1}$$

and re-sampling it at frequency 4 fsc.

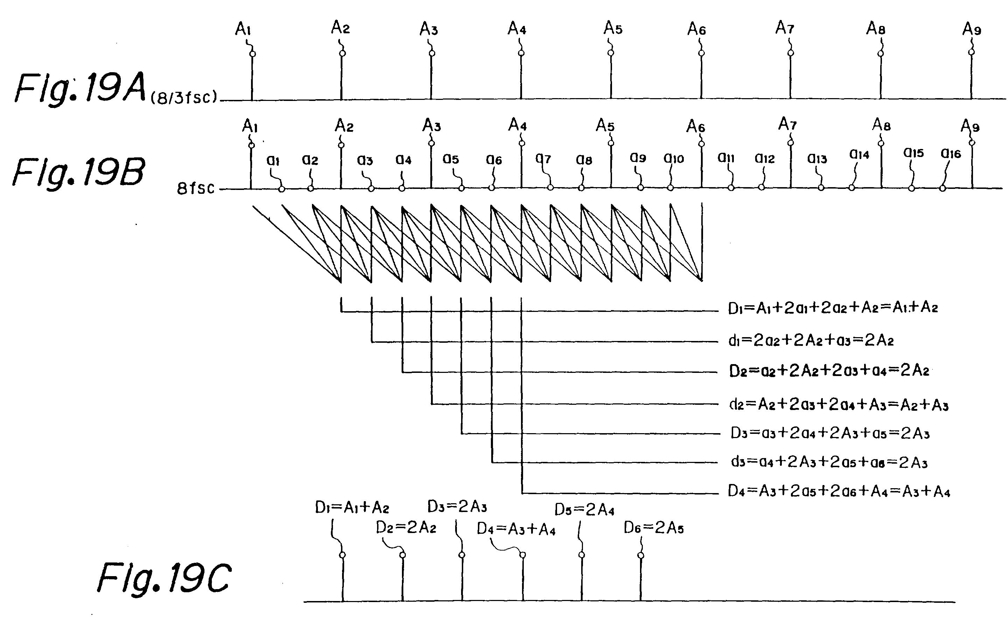

More specifically, assume that digital signals $A_1$, $A_2$, $A_3$, ... of sampling frequency (8/3) fsc as shown in Fig. 19A are entered and that they are over-sampled at frequency 8 fsc, digital signals $A_1$, $a_1$, $a_2$, $A_2$, $a_3$, $a_4$, $A_3$, $a_5$, $a_6$, ... are obtained as shown in Fig. 19B. Among these digital signals, data $a_1$, $a_2$, $a_3$, $a_4$, $a_5$, $a_6$, are 0.

When the digital signals over-sampled at 8 fsc shown in Fig. 19B are output through the filter having the transfer function shown in equation (1), digital data $D_1$, $d_1$, $D_2$, $d_2$, $D_3$, $d_3$, ... are obtained as follows:

$$D_1 = (A_1 + 2a_1 + 2a_2 + A_2)/6$$

$$d_1 = (a_1 + 2a_2 + 2A_2 + a_3)/6$$

$$D_2 = (a_2 + 2A_2 + 2a_3 + a_4)/6$$

$$d_2 = (A_2 + 2a_3 + 2a_4 + A_3)/6$$

$$D_3 = (a_3 + 2a_4 + 2A_3 + a_5)/6$$

$$d_3 = (a_4 + 2A_3 + 2a_5 + a_6)/6$$

$$D_4 = (A_3 + 2a_5 + 2a_6 + A_4)/6$$

$$\vdots \qquad\qquad \vdots$$

In this example, 1/6, which determines the entire gain, is omitted. Since data $a_1, a_2, a_3, a_4, a_5, a_6, \ldots$ are 0,

$$D_1 = A_1 + A_2$$

$$d_1 = 2A_2$$

$$D_2 = 2A_2$$

$$d_2 = A_2 + A_3$$

$$D_3 = 2A_3$$

$$d_3 = 2A_3$$

$$D_4 = A_3 + A_4$$

$$\vdots \qquad\qquad \vdots$$

When these digital signals are re-sampled at sampling frequency 4 fsc, digital signals $D_1$, $D_2$, $D_3$, $D_4$,

$$D_1 = A_1 + A_2$$

$$D_2 = 2A_2$$

$$D_3 = 2A_3$$

$$D_4 = A_3 + A_4$$

$$D_5 = 2A_4$$

$$D_6 = 2A_5$$

$$\vdots \qquad\qquad \vdots$$

In Fig. 1, a digital luminance signal of sampling frequency (8/3) fsc is supplied to the input terminal 91. A clock of frequency (8/3) fsc is supplied to a clock input terminal 92. A clock of frequency 4 fsc is supplied to a clock input terminal 93.

A digital signal from the input terminal 91 is supplied to a data input terminal of a D flip flop 94. An output of the D flip flop 94 is supplied to both an a-side input terminal of a switch circuit 95 and a data input terminal of a D flip flop 96. A clock of frequency (8/3) fsc is supplied to a clock input terminal of the D flip flop 94 from the clock input terminal 92. A clock input terminal of the D flip flop 96 is supplied with a clock of frequency (8/3) fsc via an inverter 97. An output of the D flip flop 96 is supplied to an a-side input terminal of a switch circuit 98.

An output of the switch circuit 95 is supplied to a data input terminal of a D flip flop 99. An output of the D flip flop circuit 99 is supplied to both one input terminal of an adder 101 and a b-side input terminal of the switch circuit 95.

An output of the switch circuit 98 is supplied to a data input terminal of a D flip flop 100. An output of the D flip flop 100 is supplied to both the other input terminal of the adder 101 and a b-side input terminal of the switch circuit 98. Clock input terminals of the D flip flops 99 and 100 are supplied with a clock at frequency 4 fsc from the clock input terminal 93.

An output of the adder 101 is supplied to a data input terminal of a D flip flop 102. A clock input terminal of the D flip flop 102 is supplied with a clock at frequency 4 fsc from the clock input terminal 93. An output of the D flip flop 102 is extracted from an output terminal 103.

The clock from the clock input terminal 92 is supplied to a data input terminal of a D flip flop 104. An output of the D flip flop 104 is supplied to a data input terminal of a D flip flop 105. An output of the D flip flop 105 is supplied to a data input terminal of a D flip flop 106. Clock input terminals of the D flip flops 104 to 106 are supplied with a clock at frequency 4 fsc from the clock input terminal 93. An output of the D flip flop 105 is supplied as a switch control signal to the switch circuit 98. An output of the D flip flop 106 is supplied as a switch control signal to the switch circuit 95.

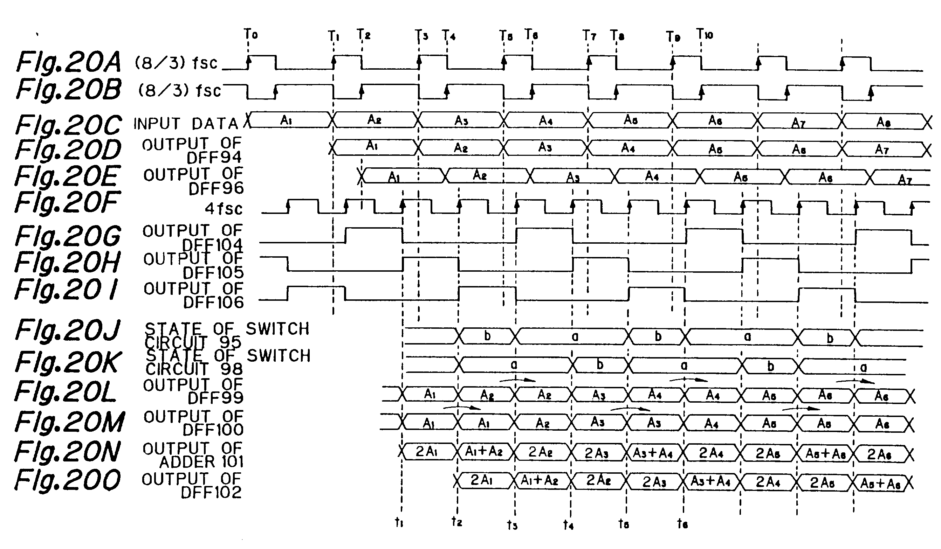

As shown in Fig. 20C, digital signals $A_1$, $A_2$, $A_3$, ... are supplied from the input terminal 91. The digital signals $A_1$, $A_2$, $A_3$, ... from the input terminal 91 are taken in the D flip flop 94 at the rising of the clock at frequency (8/3) fsc (in Fig. 20A). Digital signals $A_1$, $A_2$, $A_3$, ... are output from the D flip flop 94 at the timing shown in Fig. 20D. The output of the D flip flop 94 is supplied to the a-side input terminal of the switch circuit 95.

The clock at frequency (8/3) fsc supplied to the clock input terminal 92 has the duty ratio of 33% as shown in Fig. 20A. As shown in Fig. 20B, this clock is inverted by the inverter 97. At the rising of the inverted clock of frequency (8/3) fsc (Fig. 20B), output data from the D flip flop 94 (Fig. 20D) are taken in the D flip flop 96. The D flip flop 96 outputs digital signals $A_1$, $A_2$, $A_3$, ... at the timing shown in Fig. 20E. The output of the D flip flop 96 is supplied to the a-side input terminal of the switch circuit 98.

As shown in Figs. 20D and 20E, the timing of the digital signal output from the D flip flop 96 is behind the timing of the digital signal output from the D flip flop 94 by (1/3) clock at (8/3) fsc.

The clock of frequency (8/3) fsc from the clock input terminal 92 (Fig. 20A) is taken in the D flip flop 104 at the rising of the clock at frequency 4 fsc from the clock input terminal 93 (Fig. 20F). The D flip flop 104 outputs the signal shown in Fig. 20G. The output of the D flip flop 104 is taken in the D flip flop 105 at the rising of the clock of frequency 4 fsc from the clock input terminal 93 (Fig. 20F). The D flip flop 105 outputs the signal shown in Fig. 20H. The output of the D flip flop 105 is taken in the D flip flop 106 at the rising of the clock of frequency 4 fsc from the clock input terminal 93 (Fig. 20F). The D flip flop 106 outputs the signal shown in Fig. 20I.

As shown in Fig. 20K, the switch circuit 98 is switched by the output of the D flip flop 105 (Fig. 20H). As shown in Fig. 20K, the switch circuit 98 is switched to the a-side when the output of the D flip flop 105 is low level, and it is switched to the b-side when the output of the D flip flop 105 is high level.

As shown in Fig. 20J, the switch circuit 95 is switched by the output of the D flip flop 106 (Fig. 20I). When the output of the D flip flop 106 is low level, the switch circuit 95 is switched to the a-side. When the output of the D flip flop 106 is high level, the switch circuit 95 is switched to the b-side.

If data $A_1$ is supplied to the input terminal 91 at time $T_0$ as shown in Fig. 20C, the D flip flop 94 output the data $A_1$ at time $T_1$ which is behind by 1 clock at frequency (8/3) fsc as shown in Fig. 20D. The data $A_1$ is taken in the D flip flop 96 at time $T_2$ which is further behind by (1/3) clock at frequency (8/3) fsc as shown in Fig. 20E.

At time $t_1$ when the clock of frequency 4 fsc (Fig. 20F) rises, the output of the switch circuit 95 is taken in the D flip flop 99, and the output of the switch circuit 98 is taken in the D flip flop 100.

At time $t_1$, both switch circuits 95 and 98 have been switched to the a-side as shown in Figs. 20J and 20K. Therefore, as shown in Fig. 20L, data $A_1$ then having been output from the D flip flop 94 is taken in the D flip flop 99. Further, as shown in Fig. 20M, data $A_1$ then having been output from the D flip flop 96 is taken in the flip flop 100.

As from time $T_3$ when the clock of frequency (8/3) fsc rises, data $A_2$ is output from the D flip flop 94 as shown in Fig. 20D. From time $T_4$ which is behind by (1/3) clock therefrom at freguency (8/3) fsc, data $A_2$ is output from the D flip flop 96 as shown in Fig. 20E.

At time $t_2$ when the clock of frequency 4 fsc (Fig. 20F) rises, the output of the switch circuit 95 is taken in the D flip flop 99, and the output of the switch circuit 98 is taken in the D flip flop 100.

At time $t_2$, as shown in Figs. 20J and 20K, the switch circuit 95 has been switched into the a-side, and the switch circuit 98 has been switched into the b-side. Therefore, as shown in Fig. 20L, data $A_2$ then having been output from the D flip flop 94 is taken in the D flip flop 99. As shown in Fig. 20M, data $A_1$ having been stored in the D flip flop 100 is taken again in the D flip flop 100.

Outputs of the D flip flops 99 and 100 are added in the adder 101. Since D flip flops 99 and 100 have output data $A_2$ and $A_1$, respectively, data $(A_1 + A_2)$ is obtained in the adder 101 as shown in Fig. 20N.

From time $T_5$ when the clock of frequency (8/3) fsc rises, D flip flop 94 outputs data $A_3$ as shown in Fig. 20D.

At time $t_3$ when the clock of frequency 4 fsc (Fig. 20F) rises, the output of the switch circuit 95 is taken in the D flip flop 99, and the output of the switch circuit 98 is taken in the D flip flop 100.

At time $t_3$, as shown in Figs. 20J and 20K, the switch 95 has been switched into the b-side, and the switch circuit 98 has been switched to the a-side. Therefore, as shown in Fig. 20L, data $A_2$ having been stored in the D flip flop 99 is taken again in the D flip flop 99. Further, as shown in Fig. 20M, data $A_2$ then having been output from the switch circuit 98 is taken in the D flip flop 100.

Since D flip flops 99 and 100 output data $A_2$, respectively, data $2A_2$ is obtained in the adder 101 as shown in Fig. 20M.

At time $T_6$ when the inverted clock of frequency (8/3) fsc rises, data $A_3$ is output from the D flip flop 94 as shown in Fig. 20E.

At time $t_4$ when the clock of frequency 4 fsc (Fig. 20F) rises, the output of the switch circuit 95 is taken in the D flip flop 99, and the output of the switch circuit 98 is taken in the D flip flop 100.

At time $t_4$, as shown in Fig. 20J and 20K, both switch circuits 95 and 98 have been switched to the a-side. Therefore, as shown in Fig. 20L, data $A_3$ then having been output from the switch circuit 95 is taken in the D flip flop 99. Further, as shown in Fig. 20M, data $A_3$ then having been output from the switch circuit 98 is taken in the D flip flop 100.

Since both D flip flops 99 and 100 output data $A_3$, data $2A_3$ is obtained in the adder 101 as shown in Fig. 20N.

From time $T_7$ when the clock of frequency (8/3) fsc rises, data $A_4$ is output from the D flip flop 94 as shown in Fig. 20D. From time $T_8$ when the inverted clock of (8/3) fsc rises, data $A_4$ is output from the D flip flop 94 as shown in Fig. 20E.

At time $t_5$ when the clock of frequency 4 fsc (Fig. 20F) rises, the output of the switch circuit 95 is taken in the D flip flop 99, and the output of the switch circuit 98 is taken in the D flip flop 100.

At time $t_5$, as shown in Figs. 20J and 20K, the switch circuits 95 and 98 have been switched to the a-side and the b-side, respectively. Therefore, as shown in Fig. 20L, data $A_4$ then having been output from the D flip flop 94 is taken in the D flip flop 99. Further, as shown in Fig. 20M, data $A_3$ having been stored in the D flip flop 100 is taken again in the D flip flop 100.

Outputs of the D flip flops 99 and 100 are added in the adder 101. Since D flip flops 99 and 100 have output data $A_4$ and $A_3$, respectively, data $(A_3 + A_4)$ is obtained in the adder 101 as shown in Fig. 20N.

Foregoing operations are repeated thereafter.

As shown in Fig. 20N, data $(A_1 + A_2)$, $2A_2$, $2A_3$, $(A_3 + A_4)$ ... are obtained successively from the adder 101. An output of the adder 101 is extracted through the D flip flop 102 as shown in Fig. 200.

c3. Arrangement of Conversion Filter for Use of CCD Imaging Device with 760 Pixels per line

Fig. 2 shows an arrangement using a CCD imaging device 2 with 760 pixels per line. In this case, a digital signal of sampling frequency 4 fsc is supplied to the input terminal 91. The clock input terminal 92 is provided with the clock of frequency 4 fsc. The switch circuits 95 and 98 are fixed at the a-side. Additionally, the clock input terminal of the D flip flop 96 is supplied with the clock of frequency 4 fsc from the clock input terminal 92. The remainder arrangement is the same as the foregoing arrangement using the CCD imaging device 2 with 510 pixels per line.

In this case, digital luminance signals $B_1$, $B_2$, $B_3$, ... from the CCD imaging device 2 are supplied to the input terminal 91. In the conversion filter 84 shown in Fig. 2, data $(B_1 + B_2)$, $(B_2 + B_3)$, $(B_3 + B_4)$, ... are formed successively from the digital signals $B_1$, $B_2$, $B_3$, .... The data output corresponds to the digital signal of 4 fsc extracted through a filter whose transfer function $H(Z)$ is as follows:

$$H(Z) = (1 + Z^{-1})/2$$

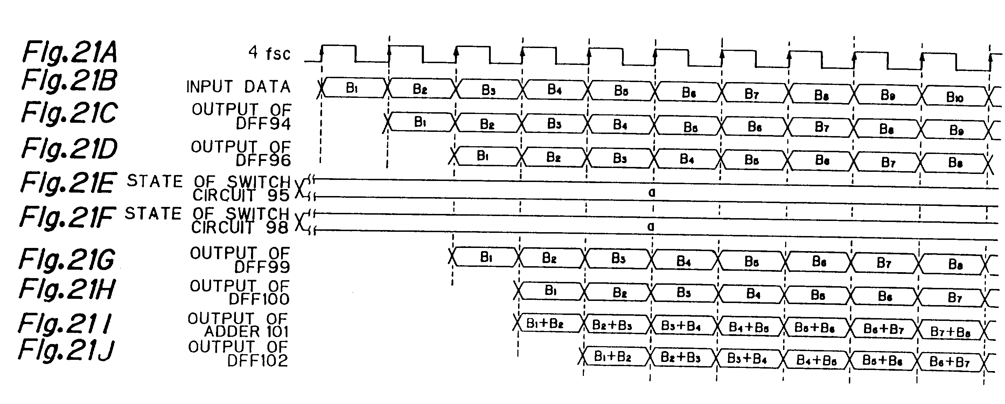

In Fig. 2, the digital luminance signals $B_1$, $B_2$, $B_3$, from the CCD imaging device 2 are supplied to the input terminal 91. The clock input terminal 92 is supplied with the clock of 4 fsc shown in Fig. 21A. The digital luminance signals from the input terminal 91 are taken in the D flip flop 94 at the rising of the clock of frequency 4 fsc (Fig. 21A). The D flip flop 94 outputs the digital signal $B_1$, $B_2$, $B_3$, to the D flip flop 96 and to the switch circuit 95.

The output of the D flip flop 94 is taken in the D flip flop 96 at the rising of the clock of frequency 4 fsc (Fig. 21A). The D flip flop 96 outputs the digital signals $B_1$, $B_2$, $B_3$, ... at the timing shown in Fig. 21D.

As shown in Figs. 21C and 21D, the output of the D flip flop 94 is delayed by 1 clock with respect to the output of the D flip flop 96. Since the switch circuits 95 and 98 have been switched to the a-side as shown in Figs. 21E and 21F, outputs of the D flip flops 94 and 96 are taken in the D flip flops 99 and 100, respectively, at the rising of the clock of frequency 4 fsc (Fig. 21A).

The D flip flops 99 and 100 output the digital signals $B_1$, $B_2$, $B_3$, ... at the timings shown in Figs. 21G and 21H. Outputs of the D flip flops 99 and 100 are added in the adder 101. As a result, as shown in Fig. 21I, data $(B_1 + B_2)$, $(B_2 + B_3)$, $(B_3 + B_4)$, ... are formed successively, and extracted from the output terminal 103 through the D flip flop 102 as shown in Fig. 21J.

c4. Characteristic of Y Separator Circuit

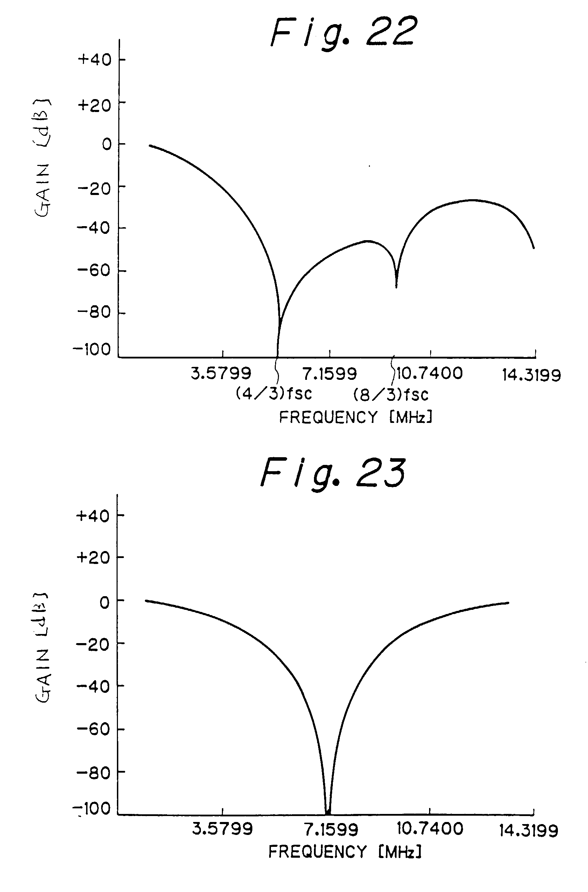

Fig. 22 shows a characteristic of the Y separator circuit 32 when the CCD imaging device with 510 pixels per line is used. In this case, the conversion filter 84 has a characteristic having the transfer function H(Z) expressed below:

$$H(Z) = (1 + 2Z^{-1} + 2Z^{-2} + Z^{-3})/6$$

with respect to a signal obtained by over-sampling the digital signal of sampling frequency (8/3) fsc at frequency 8 fsc as described before. Therefore, the entirety of the Y separator circuit 32 has the characteristic shown in Fig. 22. It is evident from the characteristic shown in Fig. 22 that a component of (4/3) fsc folded back into a low range component has been removed in the Y separator circuit 32.

Fig. 23 shows a characteristic of the Y separator circuit 32 when a CCD imaging device 2 with 760 pixels per line is used. In this case, the conversion filter 84 has the characteristic shown below:

$$H(Z) = (1 + Z^{-1})/2$$

with respect to the digital signal of sampling frequency 4 fsc as described before. Therefore, the entirety of the Y separator circuit 32 has the characteristic shown in Fig. 23. It is evident from the characteristic shown in Fig. 23 that a component of 2 fsc folded back into a low range component has been removed.

According to the invention, when a CCD imaging device with 510 pixels per line is used, input data having different phases are formed in the flip flop 96, and the switch circuits 95 and 98 are controlled so that the input data signal the input data signal different in phase and data heretofore stored in the flip flops 99 and 100 are selectively taken in the flip flops 99 and 100, respectively. Subsequently, outputs of the flip flops 99 and 100 are added in the adder 101. As a result, an output is obtained which is equivalent to a result obtained by over-sampling the digital signal of sampling frequency (8/3) fsc at frequency 8 fsc which is a common multiple of sampling frequency 4 fsc and by passing it through a filter having the transfer function expressed by:

$$H(Z) = (1 + 2Z^{-1} + 2Z^{-2} + Z^{-3})/6$$

It is noted that the system is configured to perform over-sampling at frequency 8 fsc and obtain data upon being re-sampled at frequency 4 fsc, no part thereof is required to be operated at frequency 8 fsc, which permits omission of high speed devices.

Additionally, if the switch circuits 95 and 98 are fixed, the system can obtain data resulting from passing an output of a CCD imaging device 2 with 760 pixels per line through a filter having the characteristic indicated below:

$$H(Z) = (1 + Z^{-1})/2$$

Therefore, common hardware can be used for CCD imaging devices 2 having different numbers of pixels.

## Claims

1. A sampling frequency conversion filter circuit for converting an input digital signal of a first sampling frequency to a converted signal at a second sampling frequency, said converted signal being equivalent to the input digital signal of the first sampling frequency oversampled at a common multiple of the first and second frequencies, filtered, and resampled at said second sampling frequency, the conversion circuit comprising:

a first flip-flop (99) for receiving a digital signal in synchronism with clock pulses at said second sampling frequency;

a delay circuit (96) for delaying the input digital signal of said first sampling frequency by a predetermined time; and

control means (95,98,104-106) for controlling the phase of the digital signal fed to the first flip-flop (99);

characterised in that:

the first flip-flop (99) is arranged for receiving the input digital signals at the first sampling frequency;

there is further provided a second flip-flop (100) for receiving, in synchronism with clock pulses at said second sampling frequency, the delayed digital signal of the first sampling frequency output by the delay circuit, and an adder circuit (101) for adding the outputs of the first and second flip-flops (99,100) to produce the converted signal; and

the control means (95,98,104-106) comprises first and second switch means (95,98) each having single switch outputs connected respectively to the inputs of said first and second flip-flops (99,100), said first switch means (95) having 2 switch inputs, and a switching action to selectively connect the first switch output, either to the input digital signal of said first sampling frequency or to the output of said first flip-flop (99), and said second switch means (98) having 2 switch inputs, and a switching action to selectively connect the second switch output, either to the delayed input digital signal or to the output of said second flip-flop (100), and a circuit (104-106) synchronised with clock pulses at said second sampling frequency for controlling the switching action of said first and second switch means (95,98), said switching action control circuit comprising three flip-flop circuits (104-106) connected in cascade, the first of the three cascaded flip-flop circuits (104) being arranged to receive as a data input signal clock pulses at said first sampling frequency and each of said cascaded flip-flop circuits receiving as a clock input signal pulses at said second sampling frequency, the output of the second (105) of the three cascaded flip-flop circuits controlling the switching action of the second switch means (98) and the output of the third (106) of the three cascaded flip-flop circuits controlling the switching action of the first switch means (95).

2. A sampling frequency conversion filter circuit according to claim 1, wherein the input digital signal of said first sampling frequency is a signal obtained by sampling an output of an imaging device.

3. A sampling frequency conversion filter circuit according to claim 2, wherein said first sampling frequency is based on transfer clocks of said imaging device.

4. A sampling frequency conversion filter circuit according to any of claims 1 to 3, wherein the converted digital signal of said second sampling frequency is supplied to a signal processing circuit (21-23) for executing an autofocus control and the like.

5. A sampling frequency conversion filter circuit according to claim 4, wherein said second sampling frequency is set to an integer multiple of an operating frequency of said signal processing circuit (21-23) for executing an autofocus control and the like, and the converted digital signal of said second sampling frequency is resampled at the operating frequency of said signal processing circuit (21-23) for executing an autofocus control and the like and supplied to said signal processing circuit (21-23).


**Patentansprüche**

1. Abtastfrequenzumwandlungsfilterschaltung zum Umwandeln eines digitalen Eingangssignales mit einer ersten Abtastfrequenz in ein umgewandeltes Signal mit einer zweiten Abtastfrequenz, wobei das umgewandelte Signal gleich dem digitalen Eingangssignal mit der ersten Abtastfrequenz ist, das mit einem gemeinsamen Vielfachen der ersten und zweiten Frequenz überabgetastet, gefiltert und bei der zweiten Abtastfrequenz wiederabgetastet ist, wobei das Umwandlungsfilter besteht aus:

einem ersten Flip-Flop (99), um synchron mit Zeittaktimpulsen der zweiten Abtastfrequenz ein digitales Signal zu empfangen,

einer Verzögerungsschaltung (96), um das digitale Eingangssignal mit der ersten Abtastfrequenz um eine vorbestimmte Zeit zu verzögern, und
einer Steuereinrichtung (95, 98, 104-106), um die Phase des digitalen Signales, das dem ersten Flip-Flop (99) zugeführt ist zu steuern,

**dadurch gekennzeichnet**,

daß das erste Flip-Flop (99) angeordnet ist, um die digitalen Eingangssignale mit der ersten Abtastfrequenz zu empfangen,
wobei weiterhin ein zweites Flip-Flop (100) vorgesehen ist, um synchron mit den Zeittaktimpulsen der zweiten Abtastfrequenz das verzögerte digitale Signal der ersten Abtastfrequenz, das von der Verzögerungsschaltung ausgegeben ist, zu empfangen, und
eine Addierschaltung (101) vorgesehen ist, um Ausgangssignale des ersten und zweiten Flip-Flops (99, 100) zu addieren, um das konvertierte Signal zu erzeugen, und daß die Steuereinrichtung (95, 98, 104-106) erste und zweite Umschalteinrichtungen (95, 98), wobei jede einzelne Umschaltausgänge aufweist, die jeweils mit den Eingängen der ersten und zweiten Flip-Flops (99, 100) verbunden sind, wobei die erste Umschalteinrichtung (95) zwei Umschalteingänge aufweist und ein Umschaltbetrieb vorgesehen ist, um den ersten Umschaltausgang entweder mit dem digitalen Eingangssignal der ersten Abtastfrequenz oder mit dem Ausgang des ersten Flip-Flops (99) selektiv zu verbinden, und wobei die zweite Umschalteinrichtung (98) zwei Umschalteingänge aufweist, und ein Umschaltbetrieb vorgesehen ist, um selektiv den zweiten Umschaltausgang entweder mit dem verzögerten digitalen Eingangssignal oder mit dem Ausgang des zweiten Flip-Flops (100) zu verbinden, und eine Schaltung (104-106) vorgesehen ist, die mit den Zeittaktimpulsen der zweiten Abtastfrequenz synchronisiert ist, um den Umschaltbetrieb der ersten und zweiten Umschalteinrichtung (95, 98) zu steuern, wobei die Umschaltbetriebssteuerschaltung drei Flip-Flop-Schaltungen (104-106) aufweist, die kaskadenförmig verbunden sind, wobei die erste der drei kaskadierten Flip-Flop-Schaltungen (104) so angeordnet ist, um Zeittaktimpulse mit der ersten Abtastfrequenz als Dateneingangssignale zu empfangen, und wobei jede der kaskadierten Flip-Flop-Schaltungen Impulse der zweiten Abtastfrequenz als Takteingangssignal empfangen, wobei das Ausgangssignal der zweiten (105) der drei kaskadierten Flip-Flop-Schaltungen den Umschaltbetrieb der zweiten Umschalteinrichtung (98) steuert, und wobei das Ausgangssignal der dritten (106) der drei kaskadierten Flip-Flop-Schaltungen den Umschaltbetrieb der ersten Umschalteinrichtung (95) steuert.

2. Abtastfrequenzumwandlungsfilterschaltung nach Anspruch 1,
bei der das digitale Eingangssignal der ersten Abtastfrequenz ein Signal ist, das durch Abtasten eines Ausgangssignales einer Abbildungseinrichtung erhalten ist.

3. Abtastfrequenzumwandlungsfilterschaltung nach Anspruch 2,
bei dem die erste Abtastfrequenz auf Übertragungstakten der Abbildeeinrichtung beruhen.

4. Abtastfrequenzumwandlungsfilterschaltung nach einem der Ansprüche 1 bis 3,
bei dem das umgewandelte digitale Signal mit der zweiten Abtastfrequenz einer Signalverarbeitungsschaltung (21-23) zugeführt wird, um eine Autofokussteuerung oder dergleichen durchzuführen.

5. Abtastfrequenzumwandlungsfilterschaltung nach Anspruch 4,
bei der die zweite Abtastfrequenz auf ein ganzes Mehrfaches einer Betriebsfrequenz der Signalverarbeitungsschaltung (21-23) eingestellt ist, um einer Autofokussteuerung und dergleichen auszuführen, und wobei das umgewandelte digitale Signal der zweiten Abtastfrequenz zum Durchführen einer Autofokussteuerung und dergleichen, mit der Betriebsfrequenz der Signalverarbeitungsschaltung (21-23) wiederabgetastet und der Signalverarbeitungsschaltung (21-23) zugeführt wird.

**Revendications**

1. Circuit formant un filtre de conversion de fréquence d'échantillonnage, servant à convertir un signal numérique d'entrée d'une première fréquence d'échantillonnage en un signal converti ayant une deuxième fréquence d'échantillonnage, ledit signal converti étant équivalent au signal numérique d'entrée de la première fréquence d'échantillonnage suréchantillonné à un multiple commun des première et deuxième fréquences, filtré, et rééchantillonné à ladite deuxième fréquence d'échantillonnage, le circuit de conversion comprenant :

une première bascule (99) destinée à recevoir un signal numérique en synchronisme avec des impulsions d'horloge à ladite deuxième fréquence d'échantillonnage ;
un circuit retardateur (96) servant à retarder, d'un temps prédéterminé, le signal numérique d'entrée de ladite première fréquence d'échantillonnage ; et
un moyen de commande (95, 98, 104-106) servant à ajuster la phase du signal numérique fourni à la première bascule (99);

caractérisé en ce que :

la première bascule (99) est conçue pour recevoir les signaux numériques d'entrée à la première fréquence d'échantillonnage ;
il est en outre prévu une deuxième bascule (100) destinée à recevoir, en synchronisme avec des impulsions d'horloge à ladite deuxième fréquence d'échantillonnage, le signal numérique retardé de la première fréquence d'échantillonnage qui a été délivré par le circuit retardateur, et un circuit additionneur (101) servant à additionner les signaux de sortie des première et deuxième bascules (99, 100) afin de produire le signal converti ; et le moyen de commande (95, 98, 104-106) comprend des premier et deuxième moyens de commutation (95, 98) ayant chacun des sorties de commutation simples respectivement connectées aux entrées desdites première et deuxième bascules (99, 100), ledit premier moyen de commutation (95) ayant deux entrées de commutation, et une action de commutation qui vise à sélectivement connecter la sortie du premier moyen de commutation soit au signal numérique d'entrée de ladite première fréquence d'échantillonnage, soit au signal de sortie de ladite première bascule (99), et ledit deuxième moyen de commutation (98) ayant deux entrées de commutation, et une action de commutation qui vise à sélectivement connecter la sortie du deuxième moyen de commutation soit au signal numérique d'entrée retardé, soit au signal de sortie de ladite deuxième bascule (100), et un circuit (104-106) synchronisé avec des impulsions d'horloge à ladite deuxième fréquence d'échantillonnage afin de commander l'action de commutation desdits premier et deuxième moyens de commutation (95, 98), ledit circuit de commande de l'action de commutation comprenant trois circuits basculeurs (104-106) connectés en cascade, le premier des trois circuits basculeurs connectés en cascade (104) étant destiné à recevoir, comme signal d'entrée de données, des impulsions d'horloge à ladite première fréquence d'échantillonnage et chacun desdits circuits basculeurs connectés en cascade recevant comme signal d'entrée d'horloge des impulsions ayant ladite deuxième fréquence d'échantillonnage, le signal de sortie du deuxième (105) des trois circuits basculeurs connectés en cascade commandant l'action de commutation du deuxième moyen de commutation (98) et le signal de sortie du troisième (106) des trois circuits basculeurs connectés en cascade commandant l'action de commutation du premier moyen de commutation (95).

2. Circuit formant un filtre de conversion de fréquence d'échantillonnage selon la revendication 1, où le signal numérique d'entrée de ladite première fréquence d'échantillonnage est un signal obtenu par échantillonnage du signal de sortie d'un dispositif de formation d'image.

3. Circuit formant un filtre de conversion de fréquence d'échantillonnage selon la revendication 2, où ladite première fréquence d'échantillonnage est basée sur les signaux d'horloge de transfert dudit dispositif de formation d'image.

4. Circuit formant un filtre de conversion de fréquence d'échantillonnage selon l'une quelconque des revendications 1 à 3, où le signal numérique converti de ladite deuxième fréquence d'échantillonnage est envoyé à un circuit de traitement de signaux (21-23) servant à exécuter une commande de focalisation automatique, et des réglages analogues.

5. Circuit formant un filtre de conversion de fréquence d'échantillonnage selon la revendication 4, où ladite deuxième fréquence d'échantillonnage est fixée à un multiple entier d'une fréquence de fonctionnement dudit circuit de traitement de signaux (21-23) servant à exécuter une commande de focalisation automatique et des réglages analogues, et le signal numérique converti de ladite deuxième fréquence d'échantillonnage est rééchantillonné à la fréquence de fonctionnement dudit circuit de traitement de signaux (21-23) servant à exécuter une commande de focalisation automatique et des réglages analogues et est délivré audit circuit de traitement de signaux (21-23).

# Fig. 1

# Fig. 2

Fig. 3

Fig. 4

EP 0 449 682 B1

# Fig. 5

READ-OUT LINES OF EVEN-NUMBER FIELDS

READ-OUT LINES OF EVEN-NUMBER FIELDS

| M | G | M | G | ~L3 |
|---|---|---|---|---|
| Cy | Ye | Cy | Ye | ~L1 |
| G | M | G | M | ~L2 |
| Cy | Ye | Cy | Ye | ~L1 |
| M | G | M | G | ~L3 |
| Cy | Ye | Cy | Ye | ~L1 |

READ-OUT LINES OF ODD-NUMBER FIELDS

READ-OUT LINES OF ODD-NUMBER FIELDS

READ-OUT LINES OF ODD-NUMBER FIELDS

# Fig. 6A

--- | Cy+G | Ye+M | Cy+G | Ye+M | ---

# Fig. 6B

--- | Cy+M | Ye+G | Cy+M | Ye+G | ---

EP 0 449 682 B1

## Fig. 7A

Fig. 7

| Fig. 7A | Fig. 7B |
|---------|---------|
| Fig. 7C | Fig. 7D |

EP 0 449 682 B1

# F I g. 7B

EP 0 449 682 B1

# Fig. 7C

```
        ┌──────────────┐
        │   AF AREA    │
24 ──   │   SETTING    │
        └──────────────┘

        ┌──────────────┐
        │   AE AREA    │
25 ──   │   SETTING    │
        └──────────────┘

        ┌──────────────┐
        │   AWB AREA   │
26 ──   │   SETTING    │
        └──────────────┘

        ┌──────────────┐
        │   DISPLAY    │
        │    AREA      │
        │   SETTING    │   27
        └──────────────┘

┌──────────────────────────┐
│    SERIAL INPUT PORT      │
└──────────────────────────┘
              28

        ┌──────────────┐
        │   SELECTOR    │
        └──────────────┘
           30        47
```

## Fig. 7D

Fig. 8A

Fig. 8B

Fig. 9A

Fig. 9B

Fig. 9C

Fig. 9D

# Fig. 10A

AE2

AE1

# Fig. 10B

AE2

AE1

# Fig. 11

$K_1$

OUTPUT

INPUT

# Fig. 12A

AE1

AE2

# Fig. 12B

$V_3$

# Fig. 13

# Fig. 14A

# Fig. 14B

# Fig. 15A

# Fig. 15B

# F i g. 16A

# F i g. 16B

# F i g. 17

# F i g. 18

Fig.19A (8/3fsc)

Fig.19B 8fsc

Fig.19C

$D_1 = A_1 + 2a_1 + 2a_2 + A_2 = A_1 + A_2$

$d_1 = 2a_2 + 2A_2 + a_3 = 2A_2$

$D_2 = a_2 + 2A_2 + 2a_3 + a_4 = 2A_2$

$d_2 = A_2 + 2a_3 + 2a_4 + A_3 = A_2 + A_3$

$D_3 = a_3 + 2a_4 + 2A_3 + a_5 = 2A_3$

$d_3 = a_4 + 2A_3 + 2a_5 + a_6 = 2A_3$

$D_4 = A_3 + 2a_5 + 2a_6 + A_4 = A_3 + A_4$

$D_1 = A_1 + A_2$

$D_2 = 2A_2$

$D_3 = 2A_3$

$D_4 = A_3 + A_4$

$D_5 = 2A_4$

$D_6 = 2A_5$

Fig.20A (8/3) fsc

Fig.20B (8/3) fsc

Fig.20C INPUT DATA

Fig.20D OUTPUT OF DFF94

Fig.20E OUTPUT OF DFF96

Fig.20F 4fsc

Fig.20G OUTPUT OF DFF104

Fig.20H OUTPUT OF DFF105

Fig.20I OUTPUT OF DFF106

Fig.20J STATE OF SWITCH CIRCUIT 95

Fig.20K STATE OF SWITCH CIRCUIT 98

Fig.20L OUTPUT OF DFF99

Fig.20M OUTPUT OF DFF100

Fig.20N OUTPUT OF ADDER 101

Fig.20O OUTPUT OF DFF102

EP 0 449 682 B1

*Fig.21A*   4 fsc

*Fig.21B*   INPUT DATA   $B_1$ $B_2$ $B_3$ $B_4$ $B_5$ $B_6$ $B_7$ $B_8$ $B_9$ $B_{10}$

*Fig.21C*   OUTPUT OF DFF94   $B_1$ $B_2$ $B_3$ $B_4$ $B_5$ $B_6$ $B_7$ $B_8$ $B_9$

*Fig.21D*   OUTPUT OF DFF96   $B_1$ $B_2$ $B_3$ $B_4$ $B_5$ $B_6$ $B_7$ $B_8$

*Fig.21E*   STATE OF SWITCH CIRCUIT 95   a

*Fig.21F*   STATE OF SWITCH CIRCUIT 98   a

*Fig.21G*   OUTPUT OF DFF99   $B_1$ $B_2$ $B_3$ $B_4$ $B_5$ $B_6$ $B_7$ $B_8$

*Fig.21H*   OUTPUT OF DFF100   $B_1$ $B_2$ $B_3$ $B_4$ $B_5$ $B_6$ $B_7$

*Fig.21I*   OUTPUT OF ADDER 101   $B_1+B_2$ $B_2+B_3$ $B_3+B_4$ $B_4+B_5$ $B_5+B_6$ $B_6+B_7$ $B_7+B_8$

*Fig.21J*   OUTPUT OF DFF102   $B_1+B_2$ $B_2+B_3$ $B_3+B_4$ $B_4+B_5$ $B_5+B_6$ $B_6+B_7$

# Fig. 22

# Fig. 23